(19) Europäisches Patentamt
European Patent Office
Office européen des brevets

(11) EP 2 573 658 A1

(12) **EUROPEAN PATENT APPLICATION**
published in accordance with Art. 153(4) EPC

(43) Date of publication:
**27.03.2013 Bulletin 2013/13**

(21) Application number: **11783406.9**

(22) Date of filing: **27.04.2011**

(51) Int Cl.:
***G06F 3/041*** *(2006.01)*

(86) International application number:
**PCT/JP2011/060688**

(87) International publication number:
**WO 2011/145469 (24.11.2011 Gazette 2011/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2010 JP 2010116879**

(71) Applicant: **NEC Corporation**
**Tokyo 108-8001 (JP)**

(72) Inventor: **OBA, Akitomo**
**Tokyo 108-8001 (JP)**

(74) Representative: **Vossius & Partner**
**Siebertstrasse 4**
**81675 München (DE)**

(54) **INSTRUCTED POSITION DETERMINATION DEVICE OF TOUCH PANEL, TOUCH PANEL DEVICE, ELECTRONIC APPARATUS PROVIDED WITH SAME, INSTRUCTED POSITION DETERMINATION METHOD OF TOUCH PANEL AND COMPUTER PROGRAM STORAGE MEDIUM**

(57) Provided is to prevent problems from occurring due to statistical processing for calculating a pointed position being pointed (touched) on a touch panel by a pointer.

On a touch panel (7), a touch position of a pointer (8) is measured every predetermined measurement timing. A direction in which the pointer has moved from a preceding measured position to a recent measured position is referred to as a movement direction A. A direction in which the pointer has moved from a further preceding measured position to the preceding measured position is referred to as a movement direction B. If a crossing angle θ formed by the movement directions A and B is smaller than or equal to a predetermined set angle, a position resulting from predetermined statistical processing is determined as a pointed position. If the crossing angle θ is larger than the set angle, the recent measured position is determined as a pointed position.

Fig. 2A

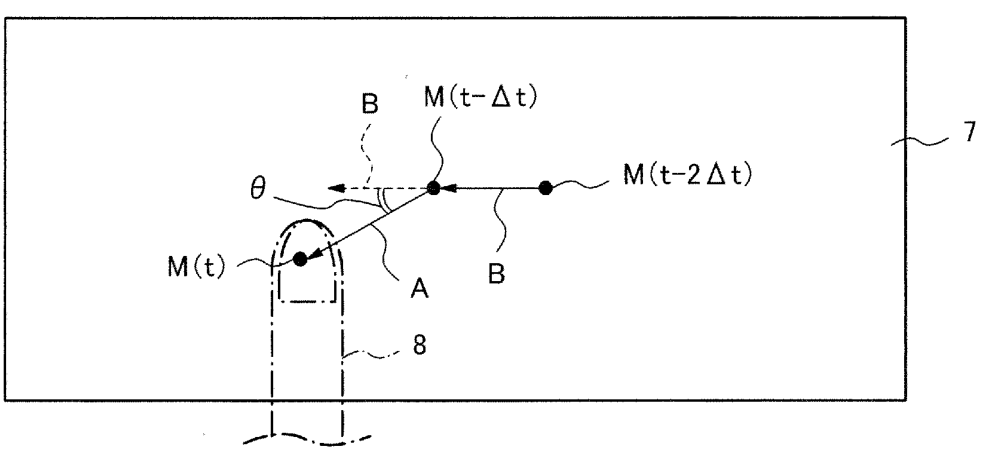


EP 2 573 658 A1

## Description

### [Technical Field]

The present invention relates to a pointed position determination apparatus of a touch panel, a touch panel apparatus, an electronics apparatus including it, a method of determining a pointed position on a touch panel, and a computer program storage medium.

### [Background Art]

Nowadays, some of various electronics devices including mobile telephones, personal computers and game machines are equipped with a touch panel. This touch panel is an input device, that is, a man-machine interface provided on a display screen of such an electronics device. By using this touch panel, the electronics device can detect a pointed position on the display screen having been pointed by a pointer (a finger, a stylus pen or the like). By using this mechanism, for example, the electronics device can display a track representing a movement of the pointed position by the pointer on the display screen. Further, when an icon displayed on the display screen has been pointed by the pointer, the electronics device can perform an operation indicated by the icon.

By the way, known examples of a method of detecting a pointed position of a pointer on a display by using a touch panel include a method described below (refer to Japanese Unexamined Patent Application Publication No. 11-272413 (PTL 1)). For example, an apparatus for detecting a pointed position (a pointed position detection apparatus) detects a pointed position of a pointer on a display at intervals of a predetermined period of time by using a touch panel. Further, the pointed position detection apparatus performs an averaging procedure based on a plurality of measured positions whose measurement timings are mutually different, such as a recent measured position and a preceding measured position. The pointed position detection apparatus detects a position resulting from the averaging procedure as a position of the pointer. By performing such an averaging procedure as described above, the pointed position detection apparatus prevents occurrence of problems due to hand jiggling or disturbance (for example, noise from electric circuits constituting the display screen).

### [Citation List]

### [Patent Literature]

**[PTL 1]** Japanese Unexamined Patent Application Publication No. 11-272413

### [Summary of Invention]

### [Technical Problem]

However, an inventor of the present application have found that such a way of handling the position obtained by performing the averaging procedure as a pointed position of the pointer causes the following problems. For example, it is supposed that two pointers, i.e., fingers 60a and 60b (refer to Fig. 17), are alternately beating a display screen 61 equipped with a touch panel. In such a case, sometimes, one of the recent and preceding measured positions corresponds to a position having been pointed (touched) by the finger 60a, and the other one thereof corresponds to a position having been pointed by the finger 60b. In other words, for example, sometimes, the recent measured position corresponds to a point S(t) shown in Fig. 17, and the preceding measured position corresponds to a point S(t-1) shown in Fig. 17. In such the case, it is supposed that the method of calculating a pointed position is an averaging procedure based on the recent measured position and the preceding measured position. In this case, a pointed position calculated by performing the averaging procedure is the position of a point P(t) shown in Fig. 17 (in other words, the position not pointed by any of the fingers 60a and 60b). That is, as a result, the pointed position detection apparatus incorrectly detects the pointed positions.

Such the situation causes a reliability reduction problem that the reliability of accuracy in the detection of pointed positions is reduced. Moreover, the following problem is also caused. This problem is an erroneous operation problem. In this problem, the situation where a position having not been pointed is detected as a pointed position causes, for example, an electronics device to erroneously determine that an icon having not been pointed by a user has been pointed. As a result, this electronics device performs an operation which has not been requested by the user.

In order to solve such problems described above, the present invention has been made. That is, a main object of the present invention is to provide a pointed position determination apparatus of a touch panel, and the like, which enables prevention of the occurrence of such problems as described above due to statistical processing for calculating a pointed position on a touch panel having being pointed by a pointer.

**[Solution to Problem]**

A pointed position determination apparatus of a touch panel in the present invention includes:

pointed position determination means for, in a case where a crossing angle formed by a first direction and a second direction is smaller than or equal to a predetermined set angle, the first direction is a direction in which a recent measured position, which has been obtained at recent one of predetermined measurement timings through measurement detecting a touch position at which a pointer has touched the touch panel, has moved relative to a preceding measured position having been obtained through the measurement at the preceding one of the measurement timings, the second direction is a direction in which the preceding measured position has moved relative to a further preceding measured position having been obtained through the measurement at the further preceding one of the measurement timings, determining a position resulting from statistical processing based on the plurality of measured positions having been obtained at the mutually different measurement timings as a pointed position having been touched on the touch panel by the pointer at the recent measurement timing, and in a case where the crossing angle is larger than the set angle, determining the recent measured position as the pointed position on the touch panel.

A touch panel apparatus in the present invention includes:

a pointed position determination apparatus of a touch panel according to the present invention.

An electronics apparatus in the present invention includes:

a touch panel apparatus according to the present invention.

A method of determining a pointed position on a touch panel in the present invention includes:

determining whether or not a crossing angle formed by a first direction and a second direction is smaller than or equal to a predetermined set angle, the first direction is a direction in which a recent measured position, which has been obtained at recent one of predetermined measurement timings through measurement detecting a touch position at which a pointer has touched the touch panel, has moved relative to a preceding measured position having been obtained through the measurement at the preceding one of the measurement timings, the second direction is a direction in which the preceding measured position has moved relative to a further preceding measured position having been obtained through the measurement at the further preceding one of the measurement timings;
determining a position resulting from statistical processing based on the plurality of measured positions having been obtained at the mutually different measurement timings as a pointed position having been touched on the touch panel by the pointer at the recent measurement timing, if the crossing angle is smaller than or equal to the set angle; and
determining the recent measured position as the pointed position on the touch panel, if the crossing angle is larger than the set angle.

A computer program storage medium storing a computer program which causes a pointed position determination apparatus of a touch panel to carry out processing in the present invention, the processing includes:

determining whether or not a crossing angle formed by a first direction and a second direction is smaller than or equal to a predetermined set angle, the first direction is a direction in which a recent measured position, which has been obtained at recent one of predetermined measurement timings through measurement detecting a touch position at which a pointer has touched the touch panel, has moved relative to a preceding measured position having been obtained through the measurement at the preceding one of the measurement timings, the second direction is a direction in which the preceding measured position has moved relative to a further preceding measured position having been obtained through the measurement at the further preceding one of the measurement timings;
determining a position resulting from statistical processing based on the plurality of measured positions having been obtained at the mutually different measurement timings as a pointed position having been touched on the touch panel by the pointer at the recent measurement timing, if the crossing angle is smaller than or equal to the set angle; and

determining the recent measured position as the pointed position on the touch panel, if the crossing angle is larger than the set angle.

## [Advantageous Effects of Invention]

According to the present invention, it is possible to prevent problems (for example, the reliability reduction problem and the erroneous operation problem described above) from occurring due to statistical processing for calculating a pointed position being pointed (touched) on a touch panel by a pointer.

## [Brief Description of Drawings]

Fig. 1A is a schematic block diagram illustrating a control configuration of a pointed position determination apparatus of a touch panel in a first exemplary embodiment of the present invention.

Fig. 1B is a block diagram illustrating a computer program storage medium storing a computer program which enables a computer to realize the pointed position determination apparatus of the touch panel in the first exemplary embodiment of the present invention.

Fig. 1C is a flowchart illustrating an example of operations (a control procedure) determining a pointed position and performing by the pointed position determination apparatus of the touch panel in the first exemplary embodiment of the present invention.

Fig. 1D is a schematic block diagram illustrating a configuration of a touch panel apparatus including the pointed position determination apparatus of the touch panel in the first exemplary embodiment of the present invention.

Fig. 1E is a schematic block diagram illustrating a configuration of an electronics apparatus including the touch panel apparatus in the first exemplary embodiment of the present invention.

Fig. 2A is a diagram illustrating an example of operations of a pointed position determination unit constituting the pointed position determination apparatus in the first exemplary embodiment of the present invention.

Fig. 2B is a diagram illustrating an example of operations of the pointed position determination unit constituting the pointed position determination apparatus in the first exemplary embodiment of the present invention, together with Fig. 2A.

Fig. 3 is a schematic block diagram illustrating a control configuration of a pointed position determination apparatus in a second exemplary embodiment of the present invention.

Fig. 4 is a diagram illustrating an example of a structure of a touch panel.

Fig. 5 is a diagram illustrating a measurement detecting a touch position of a pointer on a touch panel.

Fig. 6 is a diagram illustrating an example of movements of measured positions.

Fig. 7 is a flowchart illustrating an example of control operations determining a pointed position of a pointer in the second exemplary embodiment of the present invention.

Fig. 8A is a diagram illustrating one of advantageous effects obtained by determining a pointed position resulting from statistical processing.

Fig. 8B is a diagram illustrating one of advantageous effects obtained by determining the pointed position resulting from statistical processing, together with Fig. 8A.

Fig. 9 is a schematic block diagram illustrating a control configuration in each of third and fourth exemplary embodiments of the present invention.

Fig. 10 is a flowchart illustrating an example of control operations determining a pointed position of a pointer in the third exemplary embodiment of the present invention.

Fig. 11 is a diagram illustrating one of advantageous effects in the third exemplary embodiment of the present invention.

Fig. 12 is a flowchart illustrating an example of control operations in other exemplary embodiments of the present invention.

Fig. 13 is a flowchart illustrating another example of control operations in other exemplary embodiments of the present invention.

Fig. 14 is a flowchart illustrating a further example of control operations in other exemplary embodiments of the present invention.

Fig. 15 is a flowchart illustrating furthermore example of control operations in other exemplary embodiments of the present invention.

Fig. 16 is a diagram illustrating hardware constituting the pointed position determination apparatus.

Fig. 17 is a diagram illustrating the problem caused by performing statistical processing regarding a measured position.

## [Description of Embodiments]

Hereinafter, exemplary embodiments according to the present invention will be described with reference to the drawings.

### (First Exemplary Embodiment)

Fig. 1A is a schematic block diagram illustrating a configuration of a pointed position determination apparatus of a touch panel (hereinafter, also referred to as just a pointed position determination apparatus) according to a first exemplary embodiment of the present invention. The pointed position determination apparatus 1 according to this first exemplary embodiment includes a pointed position determination unit (pointed position determination means) 2. The pointed position determination unit 2 has the function of detecting (determining) a touch position, at which a pointer has touched a touch panel, in such a way as described below. Here, the function of the pointed position determination unit 2 will be described by using Figs. 2A and 2B.

For example, it is supposed that, on a touch panel 7, the touch position of a pointer (for example, a finger) 8 is measured every predetermined measurement timing. Here, a recent measured position having been measured in such a way as described above is referred to as M (t). Moreover, a preceding measured position having been measured at the preceding measurement timing is referred to as M(t-Δt). Furthermore, a further preceding measured position having been measured at the further preceding measurement timing is referred to as M(t-2Δt). Further, a direction in which the pointer has moved from the preceding measured position M(t-Δt) to the recent measured position M(t) is referred to as a movement direction A. Moreover, a direction in which the pointer has moved from the further preceding measured position M(t-2Δt) to the preceding measured position M(t-Δt) is referred to as a movement direction B. Furthermore, an angle formed by the movement directions A and B is referred to as a crossing angle θ in the case where it is assumed that the start points of the movement directions A and B are same.

If the crossing angle θ is smaller than or equal to a predetermined set angle, the pointed position determination unit 2 has the function of determining a position resulting from predetermined statistical processing as a pointed position having been pointed on the touch panel 7 by the pointer 8 at the recent measurement timing. This statistical processing is statistical processing based on the plurality of measured positions whose measurement timings are mutually different.

Further, if the crossing angle θ is larger than the set angle, the pointed position determination unit 2 has the function of determining the recent measured position as a pointed position having been pointed on the touch panel 7 by the pointer 8 at the recent measurement timing.

Such the function of the pointed position determination unit 2 as described above can be realized by, for example, executing a computer program (hereinafter, abbreviated as a program) 3 shown in Fig. 1B. The program 3 is stored in a computer program storage medium 9 equipped in the pointed position determination apparatus 1.

For example, the pointed position determination apparatus 1 performs an operation of determining a pointed position in such a way as described below. That is, the pointed position determination apparatus 1 determines whether or not the crossing angle θ is smaller than or equal to the set angle (refer to step S1 shown in Fig. 1C). Further, if the crossing angle θ is smaller than or equal to the set angle, the pointed position determination apparatus 1 determines a position resulting from the statistical processing as a pointed position having been pointed on the touch panel 7 by the pointer 8 at the recent measurement timing. In contrast, if the crossing angle θ is larger than the set angle, the pointed position determination apparatus 1 determines the recent measured position as a pointed position having been pointed on the touch panel 7 by the pointer 8 at the recent measurement timing (step S2).

As described above, if the crossing angle θ is larger than the set angle, the pointed position determination apparatus 1 according to this first exemplary embodiment determines not a position resulting from the statistical processing but the recent measured position as a pointed position having been pointed on the touch panel 7 by the pointer 8 at the recent measurement timing. In this way, it is possible to obtain an effect in which this pointed position determination apparatus 1 can prevent from occurring the problems due to determining a pointed position by using the statistical processing. This reason is as follows.

That is, in the case where the problems (the erroneous detection of a pointed position, and the like) due to determining a pointed position by using the statistical processing occur, for example, as the result of beatings onto the touch panel 7 performed by two fingers that are pointers, touch positions are measured as described below. For example, it is supposed that, as shown in Fig. 2B, a touch position at which a finger 8A has touched the touch panel 7 has been measured as the recent measured position M(t). In contrast, it is supposed that a touch position at which a finger 8B has touched the touch panel 7 has been already measured as the preceding measured position M(t-Δt). It is supposed that a touch position at which the finger 8A has touched the touch panel 7 has been already measured as the further preceding measured position M(t-2Δt). The direction of a movement from the preceding measured position M(t-Δt) to the recent measured position M(t) is supposed to be referred to as the movement direction A (refer to Fig. 2B). The direction of a movement from the further preceding measured position M(t-2Δt) to the previous measured position M(t-Δt) is supposed to be referred to as the movement direction B.

In such a case, the movement direction A and the movement direction B are almost reverse to each other. That is, it is assumed that the crossing angle θ formed by the movement direction A and movement direction B becomes a large angle, such as an obtuse angle. From this assumption, it is further assumed that, in the case where the crossing angle θ is a large angle (for example, in the case where the crossing angle θ is an obtuse angle), the above-described problems (i.e., the problems due to determining a pointed position by using the statistical processing) are likely to occur. In addition, in the case where the pointer 8 (refer to Fig. 2A) moves on the surface of touch panel 7 almost in only one direction, the problems are unlikely to occur. In this case, the movement directions A and B have almost the same directions, and thus, the crossing angle θ becomes small.

As described above, if the crossing angle θ is larger than the set angle, the pointed position determination apparatus 1 according to this first exemplary embodiment does not determine the position resulting from the statistical processing as a pointed position of the pointer 8. Therefore, it is possible to prevent from occurring the problems due to determining a pointed position by using the statistical processing. Besides, in the case where it is assumed that such problems are unlikely to occur, the pointed position determination apparatus 1 determines the position resulting from the statistical processing as a pointed position of the pointer 8. Therefore, in such a case, the pointed position determination apparatus 1 can obtain an effect based on determining a position resulting from the statistical processing as a pointed position of the pointer 8.

In other words, the pointed position determination apparatus 1 can obtain the effect based on determining a pointed position of the pointer 8 by using the statistical processing, and further, can obtain the effect of preventing from occurring the problems due to determining a pointed position by using the statistical processing.

As shown in Fig. 1D, the pointed position determination apparatus 1 according to this first exemplary embodiment is incorporated in a touch panel apparatus 4. In other words, the pointed position determination apparatus 1 can constitute the touch panel apparatus 4. The touch panel apparatus 4, which includes the pointed position determination apparatus 1 incorporated therein, can obtain the same effects as those of the pointed position determination apparatus 1.

Moreover, as shown in Fig. 1E, this touch panel apparatus 4 can constitute an electronics apparatus 5. The electronics apparatus 5, which includes the touch panel apparatus 4 (the pointed position determination apparatus 1) incorporated therein, can increase the reliability of responses to operations and information inputs using the touch panel apparatus 4.

**(Second Exemplary Embodiment)**

Hereinafter, a second exemplary embodiment according to the present invention will be described.

As shown in Fig. 16, a pointed position determination apparatus 10 according to this second exemplary embodiment has a storage unit (storage means) 14 and an arithmetic operation apparatus 18. The storage unit 14 is a storage apparatus having a storage medium (a computer program storage medium, for example, a non-transitory medium) storing various data and a computer program (a program) 16. The storage unit 14 is, for example, a readable and writable memory or a hard disk apparatus.

The arithmetic operation apparatus 18 includes, for example, a central processing unit (CPU). The arithmetic operation apparatus 18 controls overall operations of the pointed position determination apparatus 10 by executing the program stored in the storage unit 14. In this second exemplary embodiment, the arithmetic operation apparatus 18 realizes the following function blocks by operations of control based on the program. That is, the arithmetic operation apparatus 18 includes a measurement information acquisition unit (measurement information acquisition means) 11, an scalar product calculation unit (scalar product calculation means) 12, a statistical processing unit (statistical processing means) 13 and a pointed position determination unit (pointed position determination means) 15, such as shown in Fig. 3.

By including such function blocks as described above, the pointed position determination apparatus 10 has the function of determining (detecting) a touch position (a pointed position), at which a pointer has touched a touch panel 20, based on information acquired from the touch panel 20.

In this second exemplary embodiment, the kind of the touch panel 20, to which the pointed position determination apparatus 10 is connected, is a capacitance type. Such a capacitance type touch panel has transparent electrodes. A material forming the transparent electrodes is, for example, Indium Tin Oxide (ITO).

As shown in a sectional view of Fig. 4, the touch panel 20 is located above a display screen (for example, a liquid crystal display screen) 21. On the upper side than this touch panel 20, a transparent member (a screen) 22 composed of a glass, a plastic or the like is laminated. This transparent member 22 has the function of protecting the touch panel 20. Regarding the capacitance type touch panel, an electric field of low voltage is formed on the whole surface thereof. Under such a state, when, for example, a finger 23 that is a pointer has touched the surface of the transparent member 22, surface charges of the touch panel, corresponding to the touch portion, vary. The capacitance type touch panel detects the touch portion (the pointed portion) of the finger 23 based on the variation of the surface charges.

In this second exemplary embodiment, the pointed position determination apparatus 10 constitutes a touch panel apparatus, as well as the touch panel 20 described above. The touch panel apparatus is incorporated in an electronics apparatus equipped with a display means (for example, a liquid crystal display screen). Examples of such an electronics apparatus include a mobile telephone, a game machine, a personal computer, an automatic ticket machine, an automatic teller machine and the like. In such an electronics apparatus, the touch panel apparatus and the display means function as an information input unit by cooperating with each other.

Hereinafter, individual function blocks 11 to 12, and 15 of the control apparatus 18 constituting the pointed position determination apparatus 10 will be described.

A measurement information acquisition unit 11 has the function of acquiring a signal outputted from the touch panel 20 every predetermined measurement timing (every period of time $\Delta t$ (for example, 0.025 sec)) based on information from a time measurement means (for example, a timer) which is not illustrated.

The measurement information acquisition unit 11 can obtain a capacitance distribution on the surface (the touch panel face) of the touch panel 20 based on the signal having been acquired from the touch panel 20. For example, when an area A on a touch panel face 25 shown in Fig. 5 has been pointed by the finger 23, the capacitance of the pointed portion (the touch portion (the area A)) varies from a preset reference capacitance. By utilizing this variation of the capacitance, the measurement information acquisition unit 11 can detect whether or not is pointed on a touch panel face 25 by the finger 23.

In this second exemplary embodiment, the measurement information acquisition unit 11 further includes the function of, when having detected that a touch panel face 25 has been pointed by the finger 23, calculating the position representing the pointed portion as a measured position K. For example, in case of calculating a central position of the pointed portion (the touch portion) as the measured position K, the information acquisition unit 11 calculates a portion having a largest variation of the capacitance as the measured position (the central position of the touch portion) K. In this second exemplary embodiment, the touch panel face 25 is handled as an X-Y plane (a plane including an X-axis and a Y-axis orthogonally intersecting with each other). The measured position K is represented by an X-coordinate and a Y-coordinate on the X-Y plane.

As described above, the measurement information acquisition unit 11 calculates the coordinate of the measured position K of the pointer (hereinafter, also referred to as a measured coordinate) based on the signal from the touch panel 20.

Moreover, the measurement information acquisition unit 11 has the function of acquiring time information representing the time (the clock time) of the recent measurement timing from a clock unit (not illustrated). Furthermore, the measurement information acquisition unit 11 has the function of correlating the time information from the clock unit with information regarding the measured coordinate having been calculated in such a way as described above, and storing the information regarding the measured coordinate into the storage unit 14.

The scalar product calculation unit 12 has the function of, every time the scalar product calculation unit 12 detects that the measurement information acquisition unit 11 has calculated the coordinate of the measured position K based on the operation information regarding the measurement information acquisition unit 11, acquiring information regarding the coordinate from the measurement information acquisition unit 11 or the storage unit 14. Moreover, the scalar product calculation unit 12 has the function of acquiring the information regarding the coordinate of the recent measured position K, and further, acquiring information regarding the coordinate of a preceding measured position $K_{-\Delta t}$ and information regarding the coordinate of a further preceding measured position $K_{-2\Delta t}$ from the storage unit 14. Moreover, the scalar product calculation unit 12 has the function of calculating the scalar product of movement vectors A and B described below (hereinafter, also referred to as an scalar product A·B) based on the pieces of information having been acquired. The movement vector A is a vector including information regarding the direction of a movement from the preceding measured position $K_{-\Delta t}$ to the recent measured position K. The movement vector B is a vector including information regarding the direction of a movement from the further preceding measured position $K_{-2\Delta t}$ to the preceding measured position $K_{-\Delta t}$.

Here, it is supposed that the coordinate of the recent measured position K is represented by (X(T), Y(T)). It is supposed that the coordinate of the preceding measured position $K_{-\Delta t}$ is represented by (X(T-$\Delta$t), Y(T-$\Delta$t)). It is supposed that the coordinate of the further preceding measured position $K_{-2\Delta t}$ is represented by (X(T-2$\Delta$t), Y(T-2$\Delta$t)). In this case, the movement vector A can be represented on a component basis as follows:

$$A = (X(T) - X(T-\Delta t), Y(T) - Y(T-\Delta t))$$

Further, the vector B can be represented on a component basis as follows:

$$B = (X(T-\Delta t) - X(T-2\Delta t), Y(T-\Delta t) - Y(T-2\Delta t))$$

Further, the scalar product of the movement vector A and the movement vector B can be calculated based on the following formula (1).

$$A \cdot B = (X(T) - X(T-\Delta t)) \times (X(T-\Delta t) - X(T-2\Delta t)) + (Y(T) - Y(T-\Delta t)) \times (Y(T-\Delta t) - Y(T-2\Delta t)) \cdots\cdots (1)$$

That is, the scalar product calculation unit 12 calculates the scalar product A·B of the movement vectors A and B based on the pieces of information regarding the respective coordinates of the recent measured position K, the preceding measured position $K_{_\Delta t}$ and the further preceding measured position $K_{_2\Delta t}$, and the formula (1).

The statistical processing unit 13 has the function of performing predetermined statistical processing by using the coordinates of a respective plurality of measured positions whose measurement timing are mutually different. In this second exemplary embodiment, the statistical processing unit 13 performs the statistical processing, every time the statistical processing unit 13 detects that the measurement information acquisition unit 11 has calculated the coordinate of a measured position, based on operation information regarding the measurement information acquisition unit 11. In this second exemplary embodiment, the statistical processing is an averaging procedure using the coordinate (X(T), Y (T)) of the measured position K at the recent measurement timing (time T) and the coordinate (X(T-Δt), Y(T-Δt)) of the measured position $K_{_\Delta}$ at the preceding measurement timing (time T-Δt).

That is, the statistical processing unit 13 calculates an X coordinate Xav resulting from the statistical processing by performing an average procedure regarding the X coordinate in accordance with a formula (2) described below based on the X coordinates of the respective measured positions K and $K_{_\Delta t}$. Further, the statistical processing unit 13 calculates a Y coordinate Yav resulting from the statistical processing by performing an average procedure regarding the Y coordinate in accordance with a formula (3) described below based on the Y coordinates of the respective measured positions K and $K_{_\Delta t}$. In this way, the statistical processing unit 13 calculates coordinates resulting from the statistical processing (hereinafter, also referred to as calculated coordinates). In addition, a and b in the formulas (2) and (3) are coefficients, respectively. These coefficients are set appropriately, and may be, for example, a = 0.5 and b = 0.5, or may be a = 0.25 and b = 0.75.

$$Xav = a \times X(T) + b \times X(T-\Delta t) \cdots\cdots (2)$$

$$Yav = a \times Y(T) + b \times Y(T-\Delta t) \cdots\cdots (3)$$

Further, the statistical processing unit 13 has the function of correlating the above-described time information representing the recent measurement timing with the calculated coordinate (Xav, Yav) having been calculated in such a way as described above, and storing the calculated coordinate (Xav, Yav) into the storage unit 14.

The pointed position determination unit 15 has the function of, every time the scalar product calculation unit 12 calculates an scalar product A·B, determining whether or not the resultant scalar product A·B takes a negative value (or whether or not the resultant scalar product A·B takes a zero value or a positive value). That is, in this second exemplary embodiment, the pointed position determination unit 15 utilizes the scalar product A·B of the movement vectors A and B as the method of determining whether or not the crossing angle θ of the movement directions A and B is larger than a set angle $\theta_{sh}$ (whether or not the crossing angle θ is smaller than or equal to a set angle $\theta_{sh}$), such as described in the first exemplary embodiment. Such a utilization of the scalar product A·B is because of the following reason. That is, in this second exemplary embodiment, the set angle $\theta_{sh}$ is set to 90 degree. Further, the scalar product A·B is obtained by a formula: A·B = |A| x |B| x cos θ. From these, if the crossing angle θ of the movement directions A and B is larger than 90 degree (the set angle $\theta_{sh}$), the resultant scalar product A·B becomes a negative value, and if the crossing angle θ is smaller than or equal to 90 degree (the set angle $\theta_{sh}$), the resultant scalar product A·B becomes a zero value or a positive value. That is, the determination as to whether or not the scalar product A·B takes a negative value or the determination as to whether or not the scalar product A·B takes a zero value or a positive value is equivalent to the determination as to whether the crossing angle $\theta$ of the movement directions A and B is larger than 90 degree (the set angle $\theta_{sh}$), or smaller than or equal to 90 degree (the set angle $\theta_{sh}$). From this reason, in this second exemplary embodiment, the pointed position determination unit 15 determines whether or not the crossing angle $\theta$ of the movement directions A and B is larger than the predetermined angle $\theta_{sh}$ by using the scalar product A·B.

Moreover, the pointed position determination unit 15 has the function of reading out the coordinate (X(T), Y(T)) of the recent measured position K, which has been acquired by the measurement information acquisition unit 11, from the storage unit 14 in case of having determined that the scalar product A·B takes a negative value (in the case where the crossing angle $\theta$ is larger than the set angle $\theta_{sh}$).

Further, the pointed position determination unit 15 has the function of reading out the calculated coordinate (Xav, Yav) of the pointed position, which results from the statistical processing performed by the statistical processing unit 13, from the storage unit 14 in case of having determined that the scalar product A·B does not take a negative value (in the case where the crossing angle $\theta$ is smaller than or equal to the set angle $\theta_{sh}$).

Moreover, the pointed position determination unit 15 has the function of determining the coordinate having been read out in such a way as described above as a coordinate (Xs, Ys) of a pointed position on the touch panel 20 having been pointed by the pointer (for example, a finger) 23 at the recent measurement timing. Moreover, the pointed position determination unit 15 has the function of correlating time information representing the recent measurement timing with information regarding the determined coordinate, and storing the information regarding the coordinate into the storage unit 14.

Furthermore, the pointed position determination unit 15 has the function of outputting information regarding the coordinate (Xs, Ys) of the determined pointed position in such a way as described above to a predetermined transmission destination (for example, a control apparatus controlling the display means of the electronics apparatus). For example, the electronics apparatus having received such the information regarding the coordinate (Xs, Ys) of a pointed position performs a predetermined operation based on the received information. For example, the electronics apparatus performs an operation based on an icon which is indicated at the pointed position. Or the electronics apparatus indicates a point or a mark representing the pointed position of the pointer. Or the electronics apparatus emits a sound in accordance with the pointed position.

Next, in the pointed position determination apparatus 10, an example of operations determining a pointed position will be described in accordance with a flowchart shown in Fig. 7. That is, Fig. 7 is a flowchart illustrating an example of operations determining a pointed position in the pointed position determination apparatus 10. The flowchart shown in Fig. 7 illustrates an example of a control procedure of a program 16 executed by the arithmetic operation apparatus 18.

For example, in step S101, the pointed position determination apparatus 10 (the measurement information acquisition unit 11) determines whether or not the pointer (the finger 23) has touched the touch panel 20 based on the signal having been acquired from the touch panel 20. Through this determination, if the measurement information acquisition unit 11 has determined that the touch panel 20 is not touched by the pointer (that is, there are not any pointings of the pointer on the touch panel 20), the pointed position determination apparatus 10 prepares to acquire a next signal from the touch panel 20. Further, in step S101, if the measurement information acquisition unit 11 has detected a pointing of the pointer on the touch panel 20, the pointed position determination apparatus 10 performs processing of step S102. That is, in step S102, the measurement information acquisition unit 11 calculates the coordinate (X(T), Y(T)) of the measured position K of the pointer based on the signal from the touch panel 20. Further, the measurement information acquisition unit 11 stores the measured coordinate (X(T), Y(T)) into the storage unit 14. The measured coordinate (X (T), Y(T)) is correlated with time information regarding the recent measurement timing.

Next, in step S103, the pointed position determination apparatus 10 (the statistical processing unit 13) calculates the coordinate (Xav, Yav) of a position resulting from the statistical processing by performing the statistical processing (an averaging procedure). Further, the statistical processing unit 13 stores the calculated coordinate (Xav, Yav) into the storage unit 14. The calculated coordinate (Xav, Yav) is correlated with time information regarding the recent measurement timing.

Subsequently, in step S104, the scalar product calculation unit 12 acquires information regarding the coordinate representing the recent measured position K from the measurement information acquisition unit 11 or the storage unit 14. Further, the scalar product calculation unit 12 acquires pieces of information regarding respective measured coordinates of the preceding measured position $K_{-\Delta t}$ and the further preceding measured position $K_{-2\Delta t}$ from the storage unit 14. Further, the scalar product calculation unit 12 calculates an scalar product A·B in such a way as described above by using the pieces of information having been acquired.

Next, in step S105, the pointed position determination apparatus 10 (the pointed position determination unit 15) determines whether or not the scalar product A·B takes a negative value. Further, if it has been determined that the scalar product A·B does not take a negative value (in the case of "NO"), in step S106, the pointed position determination unit 15 determines the calculated coordinate (Xav, Yav) resulting from the statistical processing as a pointed position (Xs, Ys) having been pointed on the touch panel 20 by the pointer at the recent measurement timing. In contrast, if it has been determined that the scalar product A·B takes a negative value (in the case of "YES"), in step S107, the pointed position determination unit 15 determines the measured coordinate (X(T), Y(T)) as a pointed position (Xs, Ys) having been pointed on the touch panel 20 by the pointer at the recent measurement timing.

Further, in step S108, the pointed position determination unit 15 correlates time information regarding the recent measurement timing with information regarding the coordinate (Xs, Ys) of the pointed position having been determined in such a way as described above, and stores the information regarding the coordinate (Xs, Ys) into the storage unit 14. Further, the pointed position determination unit 15 outputs the information regarding the coordinate (Xs, Ys) to a predetermined transmission destination. Subsequently, the pointed position determination apparatus 10 prepares to acquire a next signal from the touch panel 20.

In this second exemplary embodiment, just like in the case of the first exemplary embodiment, if the crossing angle $\theta$ formed by the movement directions A and B is larger than set angle $\theta_{sh}$ (if the scalar product A·B takes a negative value), the pointed position determination apparatus 10 determines the measured position as a pointed position of the pointer on the touch panel 20 as it is. That is, in the case where any of the problems due to determining a pointed position by using the statistical processing is likely to occur, the pointed position determination apparatus 10 does not determine the position resulting from the statistical processing as a pointed position. Therefore, the pointed position determination apparatus 10 can prevent the problems occurring due to the statistical processing (for example, the problem that the performance to detect a pointed position is degraded). Moreover, in this second exemplary embodiment, if the crossing angle $\theta$ formed by the movement directions A and B is smaller than the set angle $\theta_{sh}$ (if the scalar product A·B takes a zero value or a positive value), the pointed position determination apparatus 10 determines the position resulting from the statistical processing as a pointed position having been pointed on the touch panel 20 by the pointer. Therefore, the pointed position determination apparatus 10 can obtain an effect brought by determining the position resulting from the statistical processing as a pointed position (that is, an effect of enabling alleviation of adverse influences caused by the slight shaking of a pointer, disturbance or the like). Moreover, the pointed position determination apparatus 10 can also obtain the following effect by determining a pointed position by using the statistical processing.

That is, the pointed position determination apparatus 10 supposes information regarding the touch position of the pointer as information regarding the coordinate based on an X-Y orthogonal coordinate shown in Fig. 8A. However, actually, on the touch panel face 25, the positions of coordinates X and Y represented by the signal from the touch panel 20 are sometimes arrayed in a distorted state such as shown in Fig. 8B. In this case, particularly, in the areas near edge portions of the touch panel face 25, the distortion of the coordinates becomes large. In addition, in Fig. 8B, for easy understanding, the distortion of the coordinates on the touch panel face 25 is exaggeratedly represented.

Such distortion of the coordinates X and Y as described above causes the following problems. For example, as shown by a solid line Ea of Fig. 8B, it is supposed that a pointer has moved straight on the surface of the touch panel face 25. In this case, the pointed position determination apparatus 10 performs processing based on the coordinate X-Y shown in Fig. 8A, and thus, as a result, outputs a detection result of which the pointer has moved unsteadily as shown by the solid line Eb of Fig. 8A, although the pointer has moved straight. Such the situation described above causes, for example, a problem that, in the case where the electronics apparatus displays the track of the movement of a pointer on the display based on the output of the pointed position determination apparatus 10, the smoothness of the track thereof displayed on the screen is degraded.

Further, not only the above-described distortions of the coordinates X and Y on the touch panel face 25, but also region having the blank (drop) of the coordinate X and Y sometimes occur. In this case, there occurs a situation where any pointing onto the coordinate blank region is made impossible.

Regarding such situations as described above, by performing the statistical processing described above, the distortion of the coordinates of the measured positions can be suppressed. Further, by performing the statistical processing described above, the coordinate of the coordinate blank region is calculated. From this reason, the pointed position determination apparatus 10 can obtain an effect of alleviating bad influence caused by the above-described distortion and drop of the coordinate.

The pointed position determination apparatus 10 according to this second exemplary embodiment can prevent from occurring the above-described problems due to determining a pointed position by using the statistical processing, and further, can also obtain the effect brought by determining a pointed position by using the statistical processing.

**(Third Exemplary Embodiment)**

Hereinafter, a third exemplary embodiment according to the present invention will be described. In addition, in the description of this third exemplary embodiment, portions whose names are the same as the portions of the second exemplary embodiment are denoted by the same symbols, and the duplicated descriptions of common portions thereof will be omitted.

In this third exemplary embodiment, the pointed position determination apparatus 10 includes a configuration which can detect more certainly a state where the problem due to determining a pointed position by using the statistical processing occurs (for example, a beating state where two fingers (pointers) are beating the touch panel 20 alternately).

That is, as described above, in the case where the recent pointed position and the preceding pointed position are positions resulting from touches of mutually different fingers (pointers) with the touch panel, respectively, it is assumed that a movement magnitude between the measured positions is larger than, for example, the width of a finger. From this assumption, the pointed position determination apparatus 10 utilizes, not only the crossing angle θ based on the movement directions A and B regarding measured positions, but also the measured movement magnitude described above between the recent measured position and the preceding measured position. In this way, it becomes possible for the pointed position determination apparatus 10 to detect the beating state regarding fingers with more certainty.

Based on this thought, in this third exemplary embodiment, as shown in Fig. 9, the pointed position determination apparatus 10 further includes a distance calculation unit 17 in addition to the configuration of the second exemplary embodiment.

The distance calculation unit 17 has the function of, every time detecting the state where the measurement information acquisition unit 11 has calculated the coordinate of the measured position K based on the operation information regarding the measurement information acquisition unit 11, acquiring information regarding the coordinate from the measurement information acquisition unit 11 or the storage unit 14. That is, the distance calculation section 17 has the function of acquiring information regarding the coordinate of the recent measured position K and further information regarding the coordinate of the preceding measured position $K_{-\Delta t}$ from the storage unit 14. Moreover, the distance calculation unit 17 has the function of calculating a distance (a measured movement magnitude) L between the recent measured position K and the preceding measured position $K_{-\Delta t}$ based on these pieces of information having been acquired. Specifically, it is supposed that the coordinate of the recent measured position K is represented by (X(T), Y (T)). It is supposed that the coordinate of the preceding measured position $K_{-\Delta t}$ is represented by (X(T-Δt), Y(T-Δt)). Under this supposition, the distance calculation unit 17 calculates the distance L, which is the measured movement magnitude, in accordance with the following formula (4).

$$L = \sqrt{((X(T) - X(T-\Delta t))^2 + (Y(T) - Y(T-\Delta t))^2)} \cdots\cdots (4)$$

As described below, the scalar product calculation unit 12 has the function of calculating an scalar product A·B of the movement vectors A and B in the same way as that of the second exemplary embodiment upon reception of a calculation instruction from the pointed position determination unit 15.

The pointed position determination unit 15 has the function of, every time the distance L is calculated by the distance calculation unit 17, determining whether or not the distance L is larger than a threshold value F (or whether or not the distance L is smaller than or equal to a threshold value F) by comparing the distance L with the threshold value F described below.

In this third exemplary embodiment, the threshold value F is determined in advance based on the width of the finger 23 which is a pointer (in other words, based on the size of a pointed area which is recognized as an area pointed by the finger 23). For example, the threshold value F is determined to be 15 mm. That is, a case where the problem due to determining a pointed position by using the statistical processing is likely to occur is a case where, as described above, for example, two fingers are alternately beating the touch panel 20. In this case, it is assumed that the measured movement magnitude (the distance L) is larger than the width of the finger 23 which is pointer. From this assumption, in a case where it is assumed that the threshold value F is a value corresponding to the width of the finger 23 and the measured movement magnitude (the distance L) is larger than or equal to the threshold value F, the problem described above is likely to occur.

Meanwhile, it is assumed that, for example, not the finger but, for example, a conductive touch pen or the like, is sometimes used as a pointer for the touch panel 20. In this case, a threshold value, which is based on the size of a pointed area recognized as an area pointed by the pointer such as a touch pen or the like, is set (for example, in the case where the shape of the pointed area is assumed to be substantially a circle, the diameter of this circle is set).

Moreover, the pointed position determination unit 15 has the function of issuing a calculation instruction to the scalar product calculation unit 12 in case of having determined that the distance L is larger than the threshold value F. Upon reception of this instruction, as described above, the scalar product calculation unit 12 calculates the scalar product A·B. In this way, as described in the second exemplary embodiment, the pointed position determination unit 15 determines a coordinate (Xs, Ys) of the pointed position having been pointed on the touch panel 20 by the pointer based on the calculated value of the scalar product A·B.

Moreover, in case of having determined that, as the result of comparing the distance L with the threshold value F, the distance L is not larger than the threshold value F, the pointed position determination unit 15 has the function of reading out the coordinate (Xav, Yav) of the position resulting from the statistical processing performed by the statistical processing unit 13 from the storage unit 14. Moreover, the pointed position determination unit 15 has the function of determining the read-out coordinate as a coordinate (Xs, Ys) of the pointed position having been pointed on the touch panel 20 by the pointer. Further, the pointed position determination unit 15 has the function of, in the same way as described above, correlating time information corresponding to the recent measurement timing with information regarding the determined coordinate, and storing the information regarding the coordinate into the storage unit 14.

Next, an example of operation, by which the pointed position determination apparatus 10 in this third exemplary embodiment determines a pointed position, will be described in accordance with a flowchart shown in Fig. 10. The flowchart shown in Fig. 10 illustrates an example of a control procedure of the program 16 executed by the arithmetic operation apparatus 18 of the pointed position determination apparatus 10 in the third exemplary embodiment.

In this third exemplary embodiment, the operations of steps S201 to S203 are the same as those of steps S101 to S103 shown in Fig. 7 having been described in the second exemplary embodiment.

In this third exemplary embodiment, after having performed the statistical processing in step S203, in step S204, the pointed position determination apparatus 10 (the distance calculation section 17) calculates the distance L. That is, the distance calculation section 17 calculates the distance L between the recent measured position (the measured coordinate (X(T), Y(T))) and the preceding measured position (the measured coordinate (X(T-$\Delta$t), Y(T-$\Delta$t))).

Further, in step S205, the pointed position determination apparatus 10 (the pointed position determination unit 15) compares the distance L and the threshold value F, and thereby, determines whether or not the distance L is larger than threshold value F. As the result of this determination, if determining that the distance L is not larger than the threshold value F (in the case of "NO"), in step S206, the pointed position determination unit 15 determines the calculated coordinate (Xav, Yav) resulting from the statistical processing as a pointed position (Xs, Ys) having been pointed on the touch panel 20 by the pointer.

Further, if determining that the distance L is larger than the threshold value F (in the case of "YES") in the above step S205, the pointed position determination unit 15 issues a calculation instruction to the scalar product calculation unit 12. Upon reception of this instruction, in step S207, the pointed position determination apparatus 10 (the scalar product calculation unit 12) calculates the scalar product A·B in such a way as described above. After this calculation, in step S208, the pointed position determination apparatus 10 (the pointed position determination unit 15) performs a determination operation based on the value resulting from the calculation of the scalar product A·B, just like in step S 105 of the second exemplary embodiment. Further, just like in the second exemplary embodiment, if determining that the scalar product A·B does not take a negative value (in the case of "NO"), in step S206, the pointed position determination unit 15 determines the calculation coordinate (Xav, Yav) resulting from the statistical processing as a pointed position (Xs, Ys) having been pointed on the touch panel 20 by the pointer. In contrast, if determining that the scalar product A·B takes a negative value (in the case of "YES"), in step S209, the pointed position determination unit 15 determines the measured coordinate (X (T), Y (T)) as a pointed position (Xs, Ys) having been pointed on the touch panel 20 by the pointer.

Moreover, just like in step S108 of the second exemplary embodiment, in step S210, the pointed position determination unit 15 stores the information regarding the coordinate (Xs, Ys) having been determined in such a way as described above into the storage unit 14. Further, the pointed position determination unit 15 outputs the information regarding the coordinate (Xs, Ys) to a predetermined transmission destination. Subsequently, the pointed position determination apparatus 10 prepares to acquire a next signal from the touch panel 20.

As described above, in this third exemplary embodiment, the pointed position determination apparatus 10 detects the state where the problem due to determining a pointed position resulting from the statistical processing occurs by using not only the scalar product A·B but also the measured movement magnitude (the distance L). Therefore, the pointed position determination apparatus 10 can more accurately detect the state where the problem due to the statistical processing occurs. In this way, the pointed position determination apparatus 10 can prevent more certainly from occurring the problem due to the statistical processing, and further, can obtain the effect brought by calculating a pointed position by using the statistical processing.

By the way, in case that the distance L is larger than the threshold value F, if the pointed position determination unit 15 determines the measured coordinate (X(T), Y(T)) as the pointed position (Xs, Ys) of the pointer without performing the determination operation based on the scalar product A·B, the following problem occurs. This problem occurs, for example, in case that the pointer has moved on the surface of the touch panel face 25 with the gradual increase of speed. That is, in this case, since the moving speed of the pointer is slow when the pointer has begun to move, the distance L is so small that it is smaller than or equal to the threshold value F. For this reason, the pointed position determination unit 15 determines the calculated coordinate (Xav, Yav) resulting from the statistical processing as a pointed position (Xs, Ys) of the pointer. However, along with the increase of the moving speed of the pointer, the distance L becomes larger than the threshold value F. As a result, the pointed position determination unit 15 starts to determine the measured coordinate (X(T), Y(T)) as a pointed position (Xs, Ys) of the pointer. Here, as shown in Fig. 11, an area in which the calculated coordinate (Xav, Yav) by using the statistical processing is determined as the determined pointed position (Xs, Ys) of the pointer is referred to as an area $\alpha$. Further, an area in which the measured coordinate (X(T), Y (T)) is determined as the determined pointed position (Xs, Ys) of the pointer is referred to as an area $\beta$. The foregoing problem is a problem that a blank area $\gamma$ regarding pointed positions arises in case that the determined pointed position of the pointer transfers from the area $\alpha$ to the area $\beta$. The reason why the blank area $\gamma$ arises is that the calculated coordinate (Xav, Yav) resulting from the statistical processing is located more backward in an opposite direction of the movement direction of the pointer than the measured coordinate (X(T), Y(T)), and thus, in case that the way of determining a pointed position is changed from the way of determining the calculated coordinate to the way of determining the measured coordinate, a large blank arises between pointed positions involved in the transition.

In this third exemplary embodiment, as described above, by combining the determination operation based on the distance L and the determination operation based on the scalar product A·B, the pointed position determination apparatus 10 can prevent from arising the blank area $\gamma$ described above. That is, even when the distance L becomes larger than the threshold value F due to the movement of the pointer increasing the speed thereof, in the case where the scalar product A·B does not take a negative value, that is, in the case where the pointer is moving in the same direction, the pointed position determination apparatus 10 continuously determines the calculated coordinate resulting from the statistical processing as a pointed position. Therefore, since the way of determining a pointed position is not changed from the way of determining the calculated coordinate to the way of determining the measured coordinate, the pointed position determination apparatus 10 can prevent from occurring such the problem due to changing the way of determining a pointed position as described above, in other words, the problem that the blank area regarding the pointed positions arises.

**(Fourth Exemplary Embodiment)**

Hereinafter, a fourth exemplary embodiment according to the present invention will be described. In addition, in the description of this fourth exemplary embodiment, portions whose names are the same as the portions of each of the second and third exemplary embodiments are denoted by the same symbols, and the duplicated descriptions of common portions thereof will be omitted.

In this fourth exemplary embodiment, the pointed position determination apparatus 10 includes substantially the same configuration as that of the third exemplary embodiment except for different points described below. The fourth exemplary embodiment are different from the third exemplary embodiment in two points, a first one being that the distance calculation unit 17 calculates a distance comparable value N described below, a second one being that the pointed position determination unit 15 determines a pointed position based on the distance comparable value N. Hereinafter, different portions from the third exemplary embodiment in the distance calculation unit 17 and the pointed position determination unit 15 will be described.

That is, in this fourth exemplary embodiment, the distance calculation unit 17 has the function of, instead of the distance L between the preceding measured position and the recent measured position, calculating the distance comparable value N comparable to the distance L. In this fourth exemplary embodiment, the distance comparable value N is the sum of the absolute value $\Delta X$ of the X-coordinate movement magnitude arising from moving from the preceding measured position to the recent measured position, and the absolute value $\Delta Y$ of the Y-coordinate movement magnitude arising from moving from the preceding measured position to the recent measured position. That is, the distance comparable value N can be calculated in accordance with the following formula (5).

$$N = \Delta X + \Delta Y = |X(T) - X(T-\Delta t)| + |Y(T) - Y(T-\Delta t)| \cdots\cdots (5)$$

The pointed position determination unit 15 has the function of issuing a calculation instruction to the scalar product calculation unit 12 in the case where the calculated distance comparable value N is larger than the threshold value F, just like in the third exemplary embodiment. Further, the pointed position determination unit 15 has the function of determining the calculated coordinate (Xav, Yav) resulting from the statistical processing as a pointed position having been pointed on the touch panel 20 by the pointer just like in the third exemplary embodiment, in the case where the calculated distance comparable value N is not larger than the threshold value F.

The pointed position determination apparatus 10 according to this fourth exemplary embodiment can obtain the same effects as those of the third exemplary embodiment. Moreover, the pointed position determination apparatus 10 according to this fourth exemplary embodiment can obtain the following effects. That is, in this fourth exemplary embodiment, as described above, the pointed position determination apparatus 10 uses, not the distance L, but the distance comparable value N. The calculation for calculating the distance L is a calculation including multiplications as shown in the formula (4). While the calculation for calculating the distance comparable value N is a calculation including additions and subtractions as shown in the formula (5). Therefore, the calculation for calculating the distance comparable value N is easier as compared with the calculation for calculating the distance L. Because of this ease of the calculation, the use of the distance comparable value N instead of the distance L can reduce the burden of calculation processing performed by the apparatus, and further, can shorten time necessary for calculation processing.

**(Other Exemplary Embodiments)**

In addition, the present invention is not limited to the first to fourth exemplary embodiments, and can adopt various exemplary embodiments. For example, as shown in Fig. 10, in case of having determined that the distance L (or the distance comparable value N) is larger than the threshold value F as the result of the determination operation based on the distance L (or the distance comparable value N), the pointed position determination apparatus 10 according to the third exemplary embodiment or the fourth exemplary embodiment calculates the scalar product A·B. Instead of this processing, as shown in Fig. 12, in case of having determined that the scalar product A·B takes a negative value as the result of a determination operation based on the scalar product A·B (step S305), the pointed position determination apparatus 10 may calculate the distance L (or the distance comparable value N) (step S307). The pointed position determination apparatus 10 performing such the operation can also obtain the same effect as those of the foregoing individual exemplary embodiments. In addition, individual steps (operations) other than the above-described steps in Fig. 12 are the same as those of Fig. 10.

Moreover, for example, in the fourth exemplary embodiment, the distance comparable value N is the sum of the absolute value ΔX of the X-coordinate movement magnitude and the absolute value ΔY of the Y-coordinate movement magnitude regarding the movement from the preceding measured position to the recent measured position. Instead of this, the distance comparable value N may be any one of the following six values W 1 to W6.

The value W1 is a distance between the recent measured position (measured coordinate (X(T), Y(T))) and the pointed position (coordinate ($Xs_{-\Delta t}$, $Ys_{-\Delta t}$)) having been determined at the preceding measurement. In addition, regarding the preceding determined pointed position (coordinate ($Xs_{-\Delta t}$, $Ys_{-\Delta t}$)), there are two cases, a first one being that the preceding determined pointed position is the preceding measured position (coordinate (X(T-Δt), Y(T-Δt))), a second one being that the preceding determined pointed position is the preceding position resulting from the statistical processing (calculated coordinate ($Xav_{-\Delta t}$, $Yav_{-\Delta t}$)).

The value W1 can be calculated in accordance with the following formula (6).

$$W1= \sqrt{((X(T) - Xs_{-\Delta t})^2 + (Y(T) - Ys_{-\Delta t})^2)} \cdots\cdots (6)$$

The value W2 is a distance between the recent position resulting from the statistical processing (calculated coordinate (Xav, Yav)) and the preceding measured position (measured coordinate (X(T-Δt), Y(T-Δt))). The value W2 can be calculated in accordance with the following formula (7).

$$W2 = \sqrt{((Xav - X(T-\Delta t))^2 + (Yav - Y(T-\Delta t))^2)} \cdots\cdots (7)$$

The value W3 is a distance between the recent position resulting from the statistical processing (calculated coordinate (Xav, Yav)) and the preceding determined pointed position (coordinate ($Xs_{-\Delta t}$, $Ys_{-\Delta t}$)). The value W3 can be calculated in accordance with the following formula (8).

$$W3 = \sqrt{((Xav - Xs_{-\Delta t})^2 + (Yav - Ys_{-\Delta t})^2)} \cdots\cdots (8)$$

The value W4 is the sum of the absolute value of the X-coordinate movement magnitude and the absolute value of the Y-coordinate movement magnitude regarding the movement from the previous determined pointed position to the recent measured position. The value W4 can be calculated in accordance with the following formula (9).

$$W4 = |X(T) - Xs_{-\Delta t}| + |Y(T) - Ys_{-\Delta t}| \cdots\cdots (9)$$

The value W5 is the sum of the absolute value of the X-coordinate movement magnitude and the absolute value of the Y-coordinate movement magnitude regarding the movement from the previous measured position to the recent position resulting from the statistical processing. The value W5 can be calculated in accordance with the following formula (10).

$$W5 = |Xav - X(T-\Delta t)| + |Yav - Y(T-\Delta t)| \cdots\cdots (10)$$

The value W6 is the sum of the absolute value of the X-coordinate movement magnitude and the absolute value of the Y-coordinate movement magnitude regarding the movement from the previous determined pointed position to the recent position resulting from the statistical processing. The value W6 can be calculated in accordance with the following formula (11).

$$W6 = |Xav - Xs_{-\Delta t}| + |Yav - Ys_{-\Delta t}| \cdots\cdots (11)$$

In a case that any one of the values W1 to W6 is used as the distance comparable value N, it is also possible to obtain the same effect as those of the foregoing individual exemplary embodiments.

Further, in each of the second to fourth exemplary embodiments, for example, as shown in Fig. 7 and Fig. 10, after having performed processing for calculating the measured coordinate (step S102 or S202), the pointed position determination apparatus 10 surely performs the statistical processing (step S103 or S203). Instead of this sequence, in each of the second to fourth exemplary embodiments, or in the case where any one of the values W1 and W4 (values each being calculated by not using information regarding the position resulting from the statistical processing) is used as the distance comparable value N, the pointed position determination apparatus 10 may perform the following pointed position calculation operation.

That is, as shown in Figs. 13 to 15, after having performed processing to calculate the measured coordinate (step S402, S502 or S602), the pointed position determination apparatus 10 performs processing to calculate the scalar product A·B or the distance L (the distance comparable value N) (step S403, S503 or S604) without performing the statistical processing. Further, only in the case where information regarding a position resulting from the statistical processing is required as the result of the determination processing which used the scalar product A·B or the distance L (the distance comparable value N), the pointed position determination apparatus 10 may perform the statistical processing (step S405, S505 or S605).

As a result, only in the case where information regarding a position resulting from the statistical processing is used, the pointed position determination apparatus 10 performs the statistical processing. Therefore, in the case where information regarding a position resulting from the statistical processing is not used, the statistical processing is not performed. Thereby, the pointed position determination apparatus 10 can reduce the processing. In addition, the determination operation for determining a pointed position, shown in each of Figs. 13 to 15, are the same as the determination operation for determining a pointed position, shown in each of Figs. 7, 10 and 12, except for the above-described determination operation regarding the statistical processing.

Moreover, in each of the second to fourth exemplary embodiments, information outputted to outside (for example, a control apparatus of the electronics apparatus) by the pointed position determination unit 15 is information regarding the coordinate of a determined pointed position. Instead of this, for example, information outputted to outside by the pointed position determination unit 15 may be information representing a pointed area of the pointer which includes the coordinate of a determined pointed position.

Moreover, the touch panel 20, to which the pointed position determination apparatus 10 according to each of the second to fourth exemplary embodiments is connected, is a capacitance type. The pointed position determination apparatus and the method of determining a pointed position according to the present invention may be applied to apparatuses and methods of determining a pointed position of a pointer by using a touch panel of a type other than the capacitance type. In this case, if such a type of touch panel is one which can obtain the advantageous effects through determining a pointed position of a pointer by using the statistical processing such as the averaging procedure, to apply the present invention to the apparatus or the method relating to such a type of touch panel is preferable, and brings the same effects as those of the foregoing exemplary embodiments.

Moreover, the pointed position determination apparatus 10 (the statistical processing unit 13) according to each of the second to fourth exemplary embodiments performs the statistical processing based on the recent measured position and the preceding measured position. Instead of this processing, for example, the pointed position determination apparatus 10 (the statistical processing unit 13) may perform the statistical processing further in consideration of the further preceding measured position, in addition to the recent measurement result and the preceding measurement result. In this way, the pointed position determination apparatus 10 may perform the statistical processing by using three or more pieces of information regarding respective measured positions having been measured at mutually different timings.

Moreover, in each of the third and fourth exemplary embodiments, the pointed position determination apparatus 10 (the pointed position determination unit 15) performs a determination operation as to whether or not the distance L or the distance comparable value N is smaller than or equal to the threshold value F. Instead of this processing, the pointed position determination apparatus 10 (the pointed position determination unit 15) may perform a determination operation as to whether or not the distance L or the distance comparable value N is smaller than the threshold value F. Further, in each of the second to fourth exemplary embodiments, the pointed position determination apparatus 10 (the pointed position determination unit 15) performs a determination operation as to whether or not the scalar product A·B takes a negative value. Regarding this determination operation, the pointed position determination apparatus 10 (the pointed position determination unit 15) may perform a determination operation as to whether or not the scalar product A·B takes a zero value or a positive value.

Moreover, in each of the second to fourth exemplary embodiments, an example of which a time interval with which a signal is acquired from the touch panel 20 is 0.025 sec is described. But, it is preferable to make the time interval as small as possible in consideration of processing power and the like of the apparatus. Moreover, in each of the second to fourth exemplary embodiments, the pointed position of a pointer is represented by using an orthogonal coordinate, but the pointed position of a pointer may be represented by using other methods each employing a different coordinate system or the like. Further, in each of the second to fourth exemplary embodiments, the measurement timing, at which the touch position of a pointer on the touch panel 20 is measured, is set at intervals of a predetermined period of time. Instead of this configuration, the measurement timing may be set at intervals of a control cycle during which the pointed position determination apparatus 10 performs a predetermined series of control operations.

In addition, in each of the foregoing exemplary embodiments, an example of which the individual functions 11 to 13, 15 and 17 of the pointed position determination apparatus 10 are realized by the program 16 is described. However, in realizing the pointed position determination apparatus 10, these individual functions 11 to 13, 15 and 17 can be recognized as predetermined function units which are realized by at least one of a computer program and hardware. Accordingly, a part or the whole of the individual functions 11 to 13, 15 and 17 of the pointed position determination apparatus 10 may be realized by hardware.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2010-116879, filed on May 21, 2010, the disclosure of which is incorporated herein in its entirety by reference.

**[Industrial Applicability]**

It is possible to obtain advantageous effects by applying the present invention to various electronics apparatus equipped with a touch panel.

**[Reference Signs List]**

| | |
|---|---|
| 1, 10 | Pointed position determination apparatus of a touch panel |
| 2, 15 | Pointed position determination unit |
| 4 | Touch panel apparatus |
| 5 | electronics apparatus |
| 12 | Scalar product calculation unit |
| 13 | Statistical processing unit |
| 17 | Distance calculation unit |
| 20 | Touch panel |
| 23 | Finger |

**Claims**

**1.** A pointed position determination apparatus of a touch panel, comprising:

pointed position determination means for, in a case where a crossing angle formed by a first direction and a second direction is smaller than or equal to a predetermined set angle, the first direction is a direction in which a recent measured position, which has been obtained at recent one of predetermined measurement timings through measurement detecting a touch position at which a pointer has touched the touch panel, has moved relative to a preceding measured position having been obtained through the measurement at the preceding one of the measurement timings, the second direction is a direction in which the preceding measured position has moved relative to a further preceding measured position having been obtained through the measurement at the further preceding one of the measurement timings, determining a position resulting from statistical processing based on the plurality of measured positions having been obtained at the mutually different measurement timings as a pointed position having been touched on the touch panel by the pointer at the recent measurement timing, and in a case where the crossing angle is larger than the set angle, determining the recent measured position as the pointed position on the touch panel.

**2.** The pointed position determination apparatus of the touch panel according to claim 1, wherein, instead of the case where the crossing angle is smaller than or equal to the set angle, in a case where an scalar product of a movement vector of the recent measured position relative to the preceding measured position and a movement vector of the preceding measured position relative to the further preceding measured position takes a zero value or a positive value, the pointed position determination means determines the position resulting from the statistical processing as a pointed position having been touched on the touch panel by the pointer at the recent measurement timing, and instead of the case where the crossing angle is larger than the set angle, in a case where the scalar product takes a negative value, the pointed position determination means determines the recent measured position as the pointed position on the touch panel.

**3.** The pointed position determination apparatus of the touch panel according to claim 1, wherein the set angle is 90 degree.

**4.** The pointed position determination apparatus of the touch panel according to claim 1, 2 or 3, further comprising:

statistical processing means for performing an averaging procedure using the plurality of measured positions including the recent measured position and the preceding measured position,
wherein, in the case where the crossing angle is smaller than or equal to the set angle or in the case where the scalar product takes a zero value or a positive value, the pointed position determination means determines the position resulting from the averaging procedure as the pointed position having been touched on the touch panel by the pointer at the recent measurement timing.

**5.** The pointed position determination apparatus of the touch panel according to any one of claims 1 to 4, further comprising:

distance calculation means for calculating a distance between the recent measured position and the preceding measured position or a distance comparable value comparable to the distance as a measured movement magnitude,
wherein, in the case where the measured movement magnitude is larger than a threshold value, the pointed position determination means performs the pointed position determination processing of using the crossing angle or the scalar product.

**6.** The pointed position determination apparatus of the touch panel according to claim 5, wherein, in the case where the measured movement magnitude is smaller than the threshold value, the pointed position determination means determines the position resulting from the statistical processing as the pointed position having been touched on the touch panel by the pointer at the recent measurement timing.

**7.** The pointed position determination apparatus of the touch panel according to any one of claims 1 to 4, further comprising:

distance calculation means for calculating a distance between the recent measured position and the preceding measured position, or a distance comparable value comparable to the distance as a measured movement magnitude,
wherein, in the case where the measured movement magnitude is smaller than a threshold value even if the crossing angle is larger than the set angle, or even if the scalar product takes a negative value, the pointed position determination means determines the position resulting from the statistical processing as a pointed position having been touched on the touch panel by the pointer at the recent measurement timing.

**8.** The pointed position determination apparatus of the touch panel according to claim 5, 6 or 7, wherein the distance comparable value is a sum of an absolute value of a movement magnitude of an X coordinate and an absolute value of a movement magnitude of a Y coordinate regarding a movement from a measured coordinate of representing the preceding measured position or a coordinate of representing the preceding position through the statistical processing to a measured coordinate of representing the recent measured position or a coordinate of representing the recent position through the statistical processing.

**9.** The pointed position determination apparatus of the touch panel according to claim 5, 6 or 7, wherein the distance comparable value is a distance between the pointed position having been determined at the preceding measurement timing and the recent measured position.

**10.** The pointed position determination apparatus of the touch panel according to claim 5, 6 or 7, wherein the distance comparable value is a distance between the preceding measured position and the position resulting from the statistical processing at the recent measurement timing.

**11.** The pointed position determination apparatus of the touch panel according to claim 5, 6 or 7, wherein the distance comparable value is a distance between the pointed position having been determined at the preceding measurement timing and the position resulting from the statistical processing at the recent measurement timing.

**12.** The pointed position determination apparatus of the touch panel according to any one of claims 5 to 11, wherein the threshold value is a value based on a size of an area, which is recognized as an area pointed by the pointer, on the touch panel.

**13.** A touch panel apparatus, comprising:

a pointed position determination apparatus of a touch panel according to any one of claims 1 to 12.

**14.** An electronics apparatus, comprising:

a touch panel apparatus according to claim 13.

**15.** A method of determining a pointed position on a touch panel, comprising:

determining whether or not a crossing angle formed by a first direction and a second direction is smaller than or equal to a predetermined set angle, the first direction is a direction in which a recent measured position, which has been obtained at recent one of predetermined measurement timings through measurement detecting a touch position at which a pointer has touched the touch panel, has moved relative to a preceding measured position having been obtained through the measurement at the preceding one of the measurement timings, the second direction is a direction in which the preceding measured position has moved relative to a further preceding measured position having been obtained through the measurement at the further preceding one of the measurement timings;

determining a position resulting from statistical processing based on the plurality of measured positions having been obtained at the mutually different measurement timings as a pointed position having been touched on the touch panel by the pointer at the recent measurement timing, if the crossing angle is smaller than or equal to the set angle; and

determining the recent measured position as the pointed position on the touch panel, if the crossing angle is larger than the set angle.

**16.** A computer program storage medium storing a computer program which causes a pointed position determination apparatus of a touch panel to carry out processing, the processing comprising:

determining whether or not a crossing angle formed by a first direction and a second direction is smaller than or equal to a predetermined set angle, the first direction is a direction in which a recent measured position, which has been obtained at recent one of predetermined measurement timings through measurement detecting a touch position at which a pointer has touched the touch panel, has moved relative to a preceding measured position having been obtained through the measurement at the preceding one of the measurement timings, the second direction is a direction in which the preceding measured position has moved relative to a further preceding measured position having been obtained through the measurement at the further preceding one of the measurement timings;
determining a position resulting from statistical processing based on the plurality of measured positions having been obtained at the mutually different measurement timings as a pointed position having been touched on the touch panel by the pointer at the recent measurement timing, if the crossing angle is smaller than or equal to the set angle; and
determining the recent measured position as the pointed position on the touch panel, if the crossing angle is larger than the set angle.

Fig. 1A

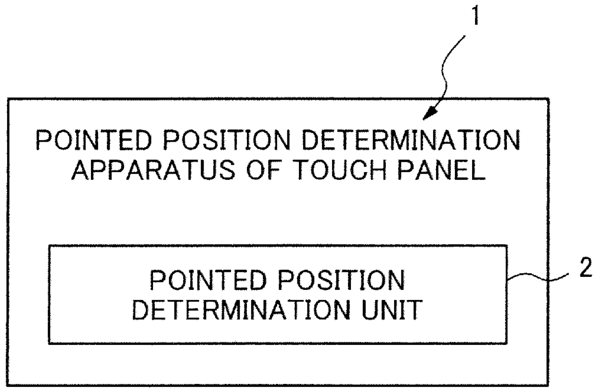


Fig. 1B

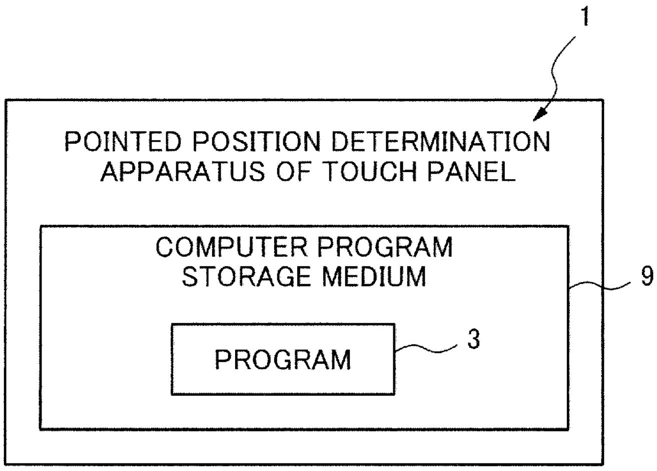


Fig. 1C

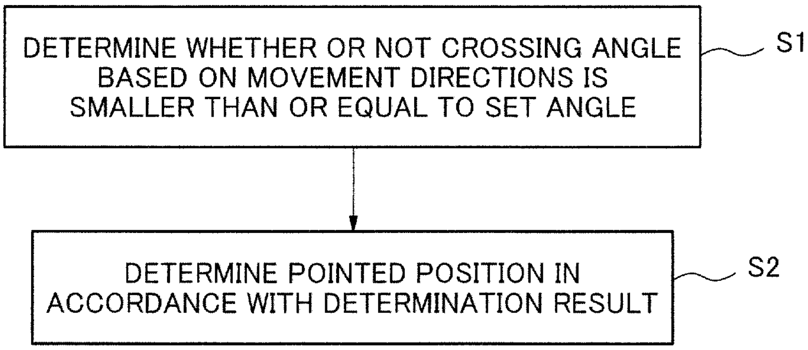


Fig. 1D

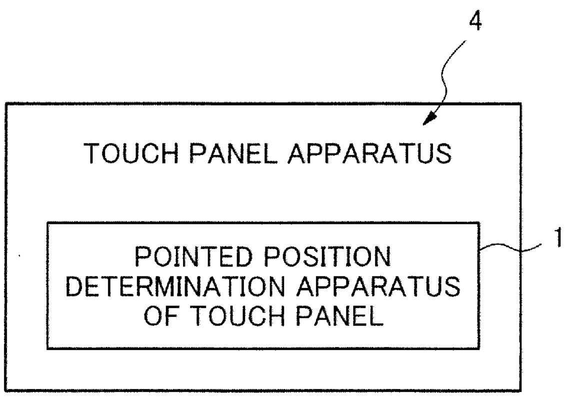

Fig. 1E

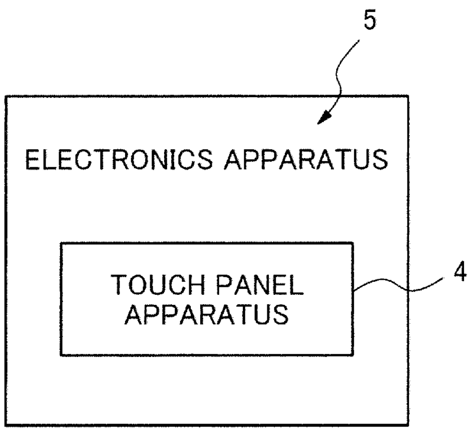


Fig. 2A

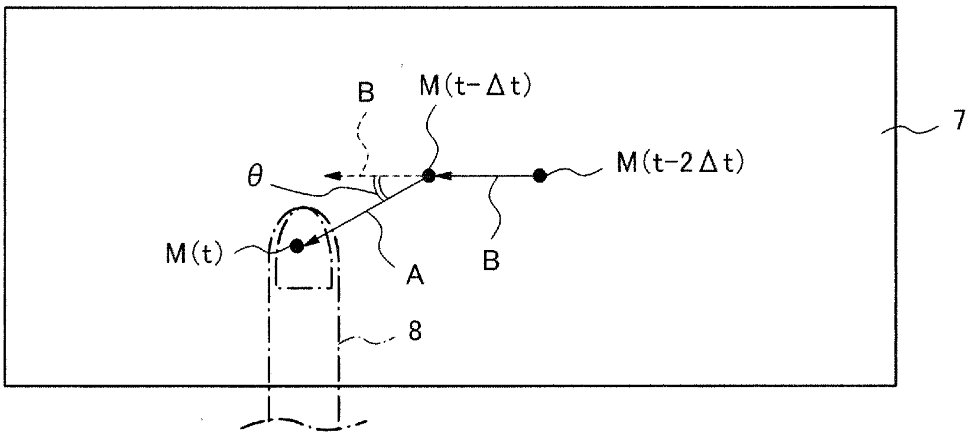


Fig. 2B

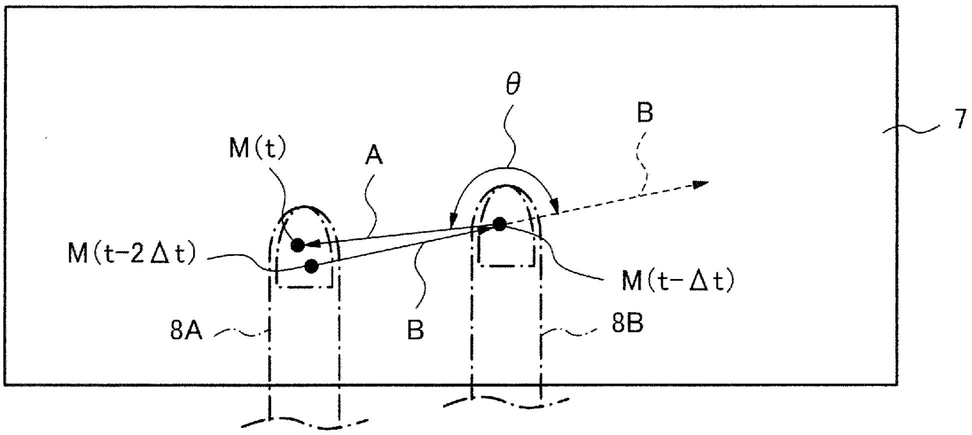

Fig. 3

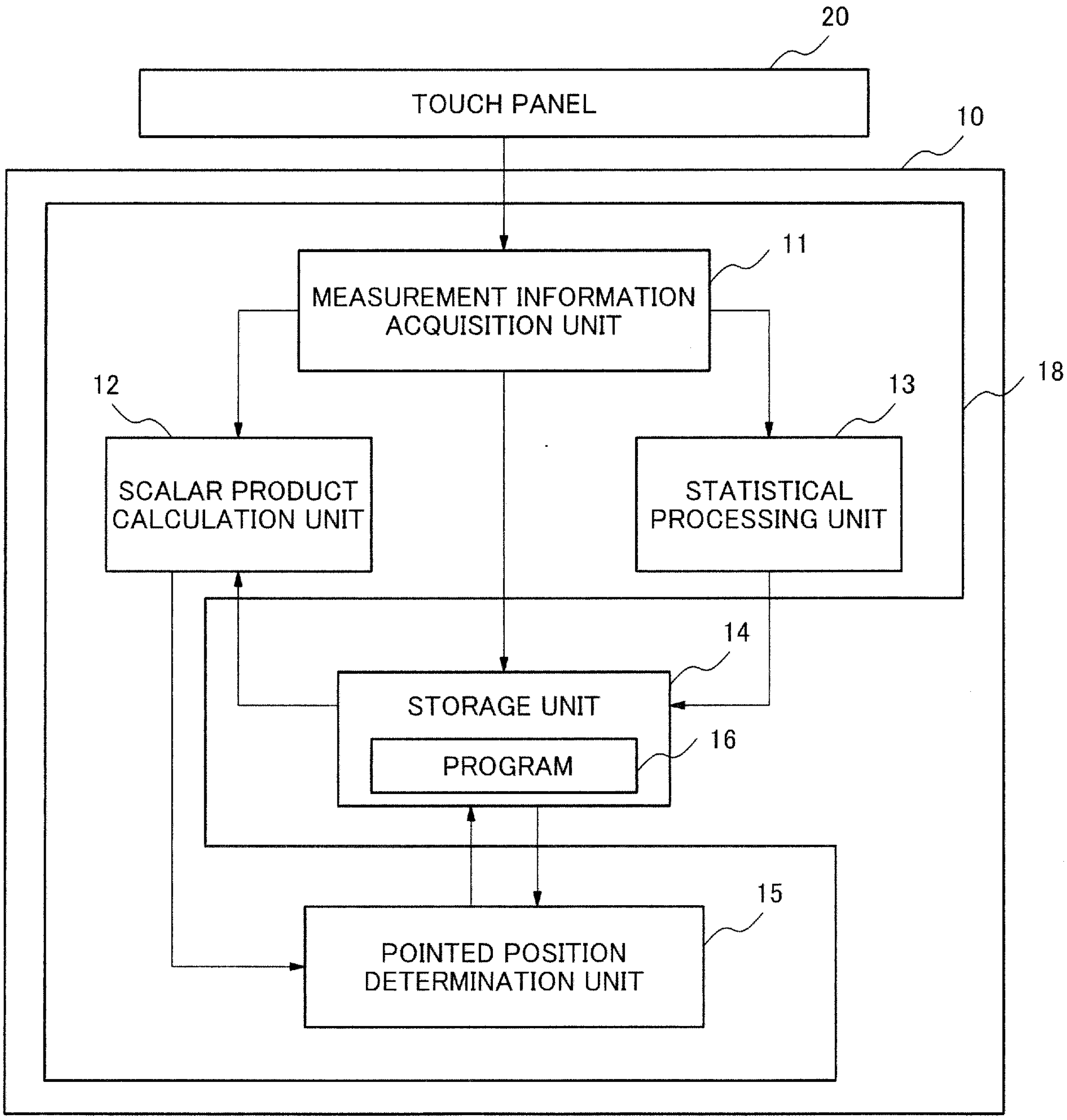
20
TOUCH PANEL
10
11
MEASUREMENT INFORMATION ACQUISITION UNIT
12
13
18
SCALAR PRODUCT CALCULATION UNIT
STATISTICAL PROCESSING UNIT
14
STORAGE UNIT
16
PROGRAM
15
POINTED POSITION DETERMINATION UNIT

Fig. 4

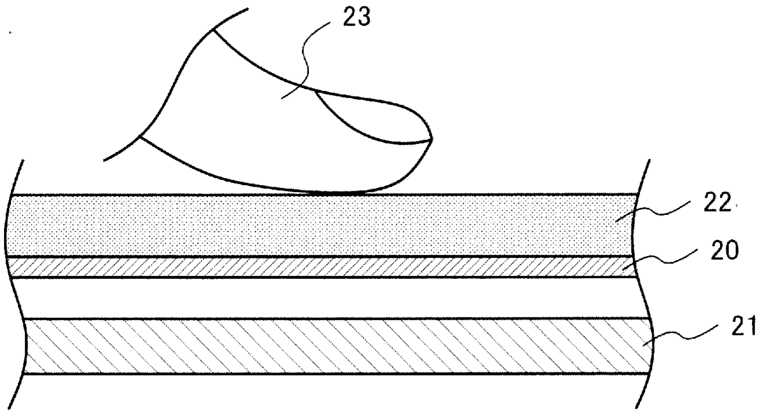


Fig. 5

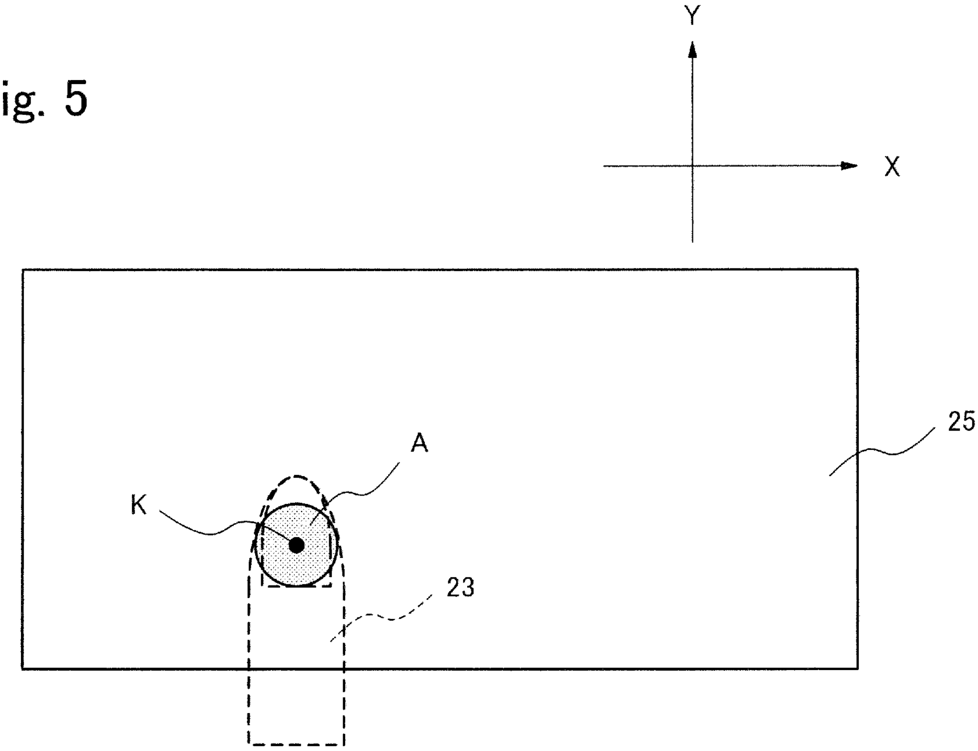

Fig. 6

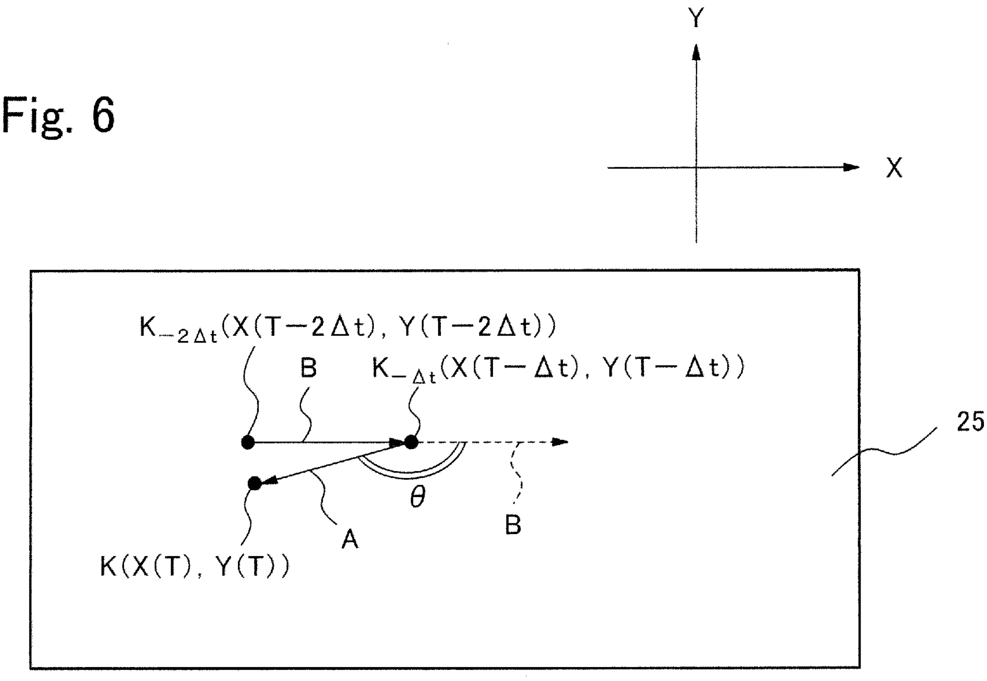

Fig. 7

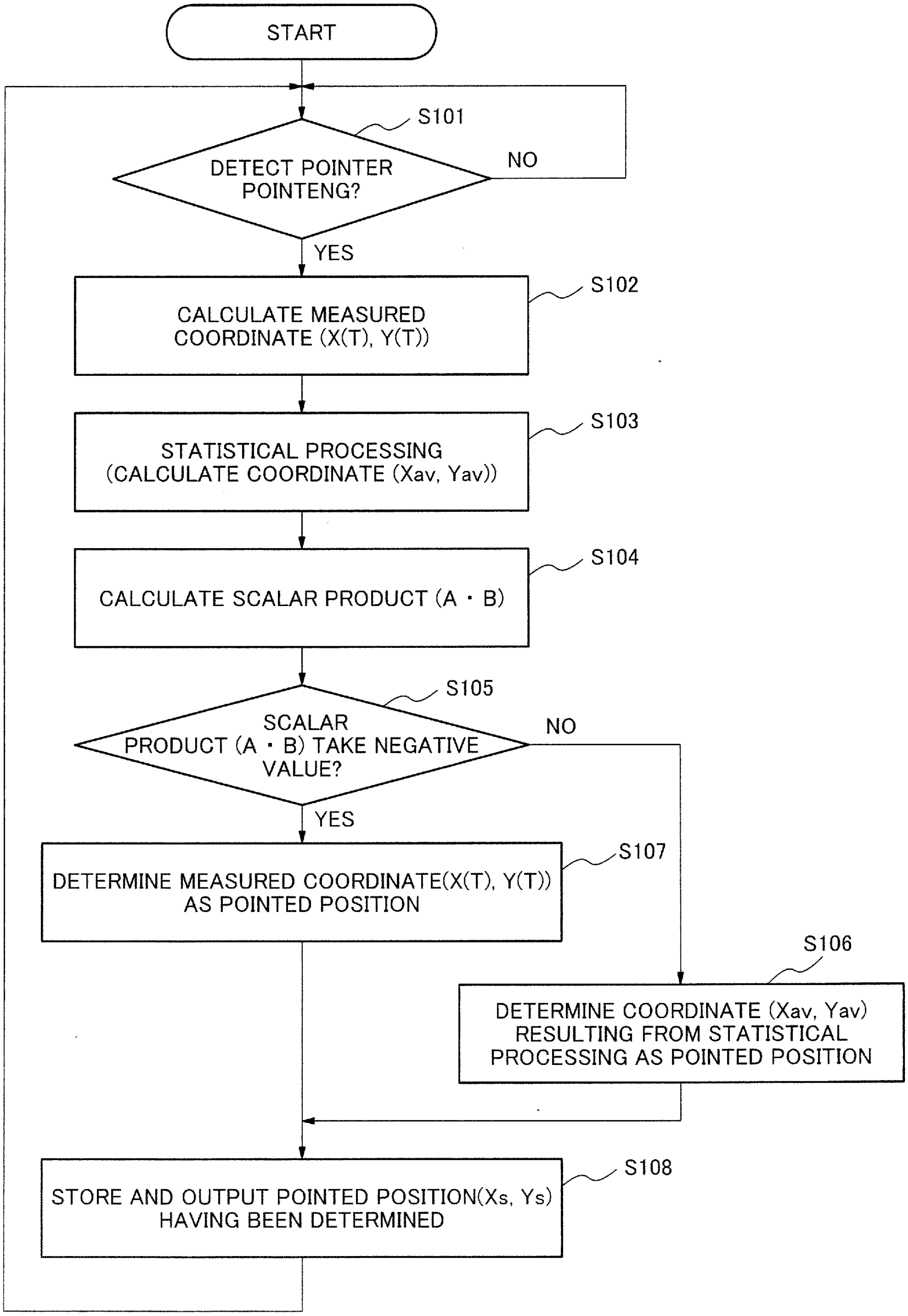
START
S101
DETECT POINTER POINTENG?
NO
YES
S102
CALCULATE MEASURED COORDINATE (X(T), Y(T))
S103
STATISTICAL PROCESSING (CALCULATE COORDINATE (Xav, Yav))
S104
CALCULATE SCALAR PRODUCT (A · B)
S105
SCALAR PRODUCT (A · B) TAKE NEGATIVE VALUE?
NO
YES
S107
DETERMINE MEASURED COORDINATE(X(T), Y(T)) AS POINTED POSITION
S106
DETERMINE COORDINATE (Xav, Yav) RESULTING FROM STATISTICAL PROCESSING AS POINTED POSITION
S108
STORE AND OUTPUT POINTED POSITION(Xs, Ys) HAVING BEEN DETERMINED

Fig. 8A

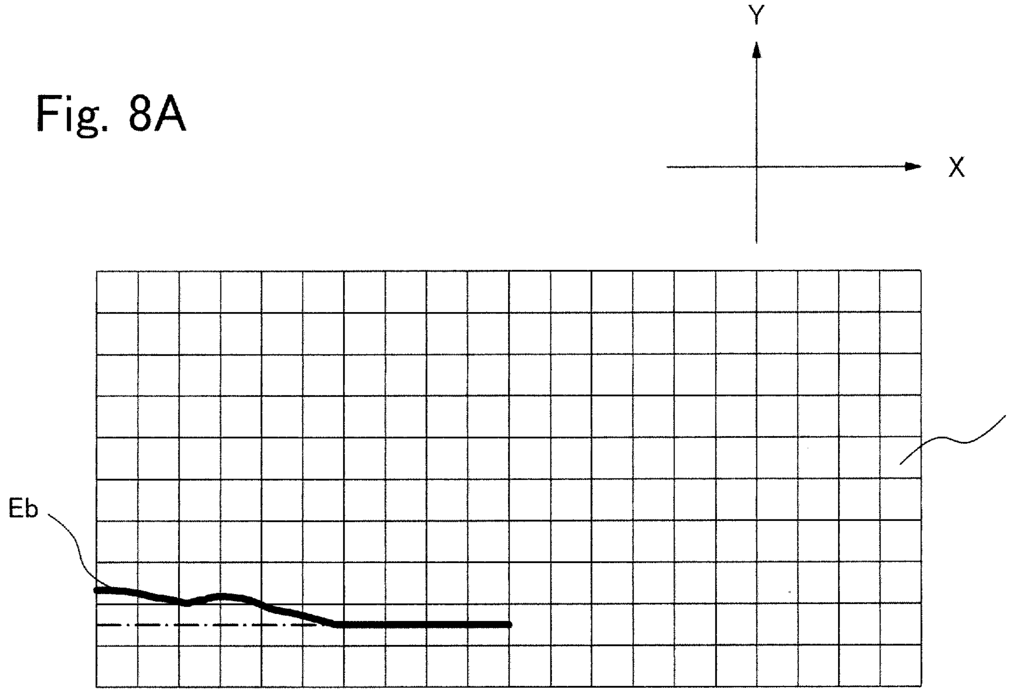


Fig. 8B

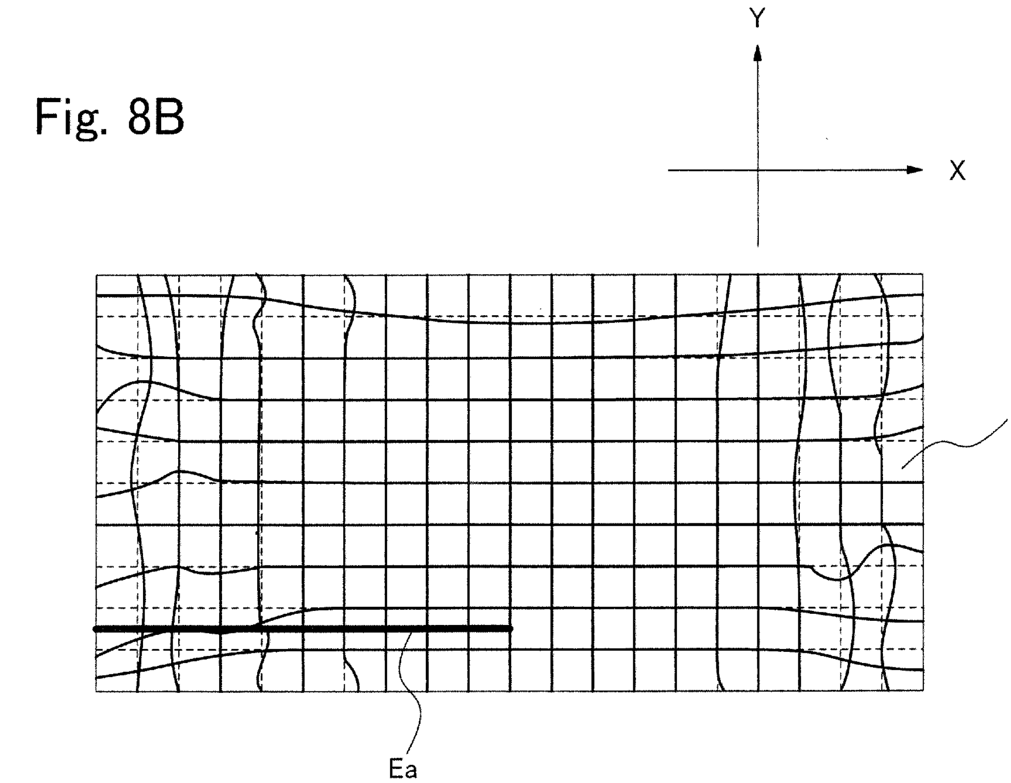

Fig. 9

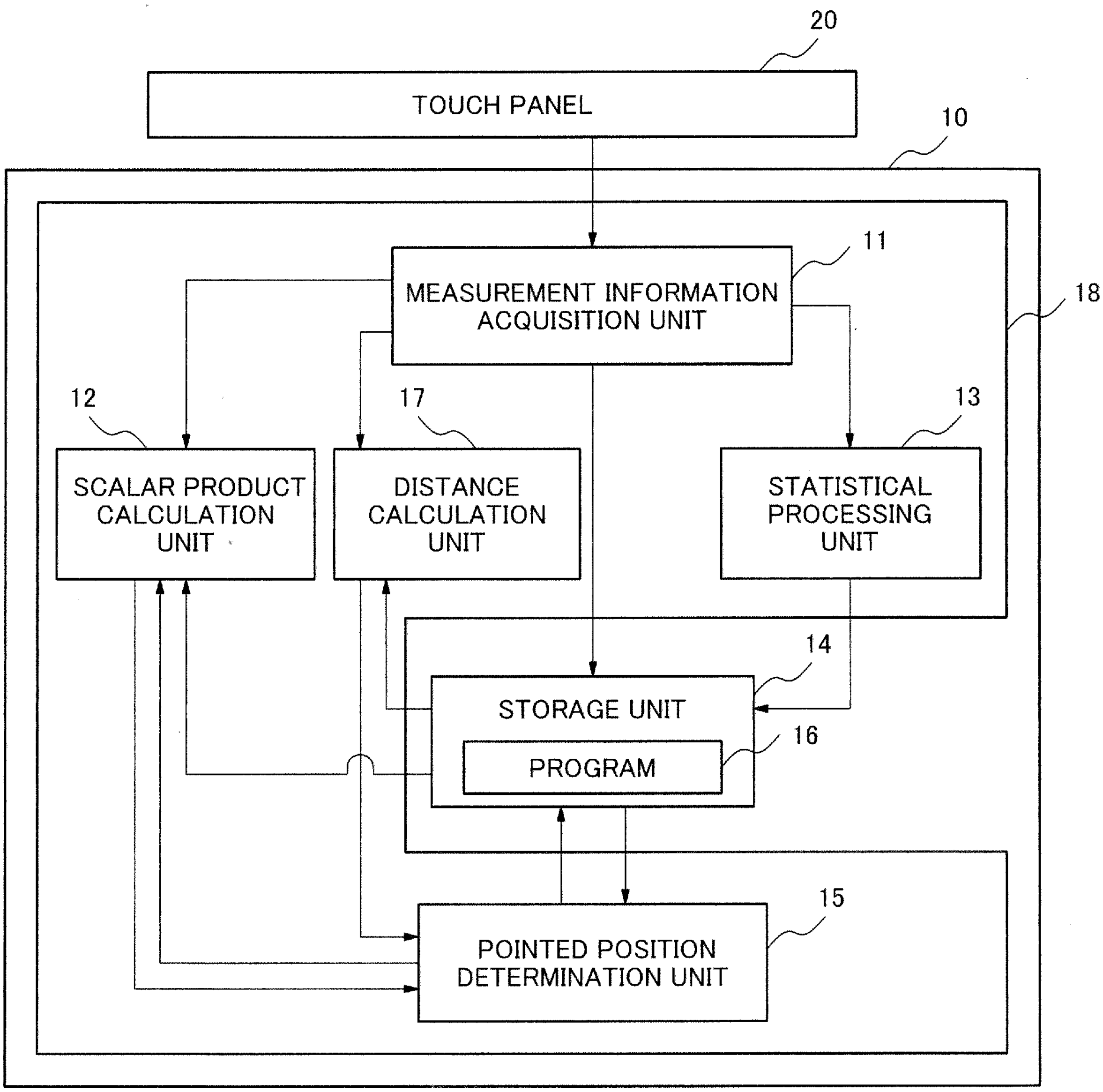
20
TOUCH PANEL
10
11
MEASUREMENT INFORMATION ACQUISITION UNIT
18
12
17
13
SCALAR PRODUCT CALCULATION UNIT
DISTANCE CALCULATION UNIT
STATISTICAL PROCESSING UNIT
14
STORAGE UNIT
16
PROGRAM
15
POINTED POSITION DETERMINATION UNIT

Fig. 10

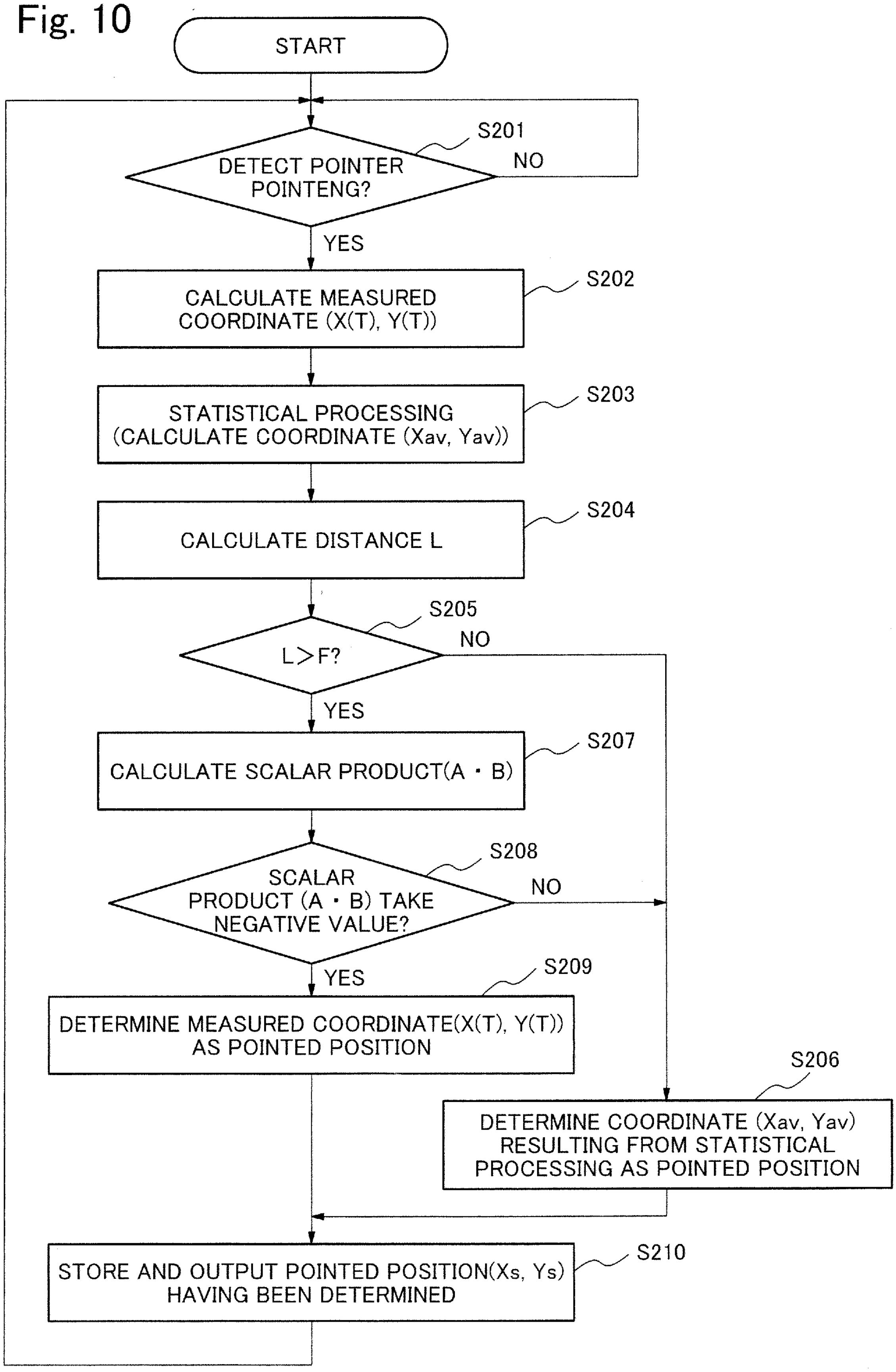
START
S201
DETECT POINTER POINTENG?
NO
YES
S202
CALCULATE MEASURED COORDINATE (X(T), Y(T))
S203
STATISTICAL PROCESSING (CALCULATE COORDINATE (Xav, Yav))
S204
CALCULATE DISTANCE L
S205
L>F?
NO
YES
S207
CALCULATE SCALAR PRODUCT(A・B)
S208
SCALAR PRODUCT (A・B) TAKE NEGATIVE VALUE?
NO
YES
S209
DETERMINE MEASURED COORDINATE(X(T), Y(T)) AS POINTED POSITION
S206
DETERMINE COORDINATE (Xav, Yav) RESULTING FROM STATISTICAL PROCESSING AS POINTED POSITION
S210
STORE AND OUTPUT POINTED POSITION(Xs, Ys) HAVING BEEN DETERMINED

Fig. 11

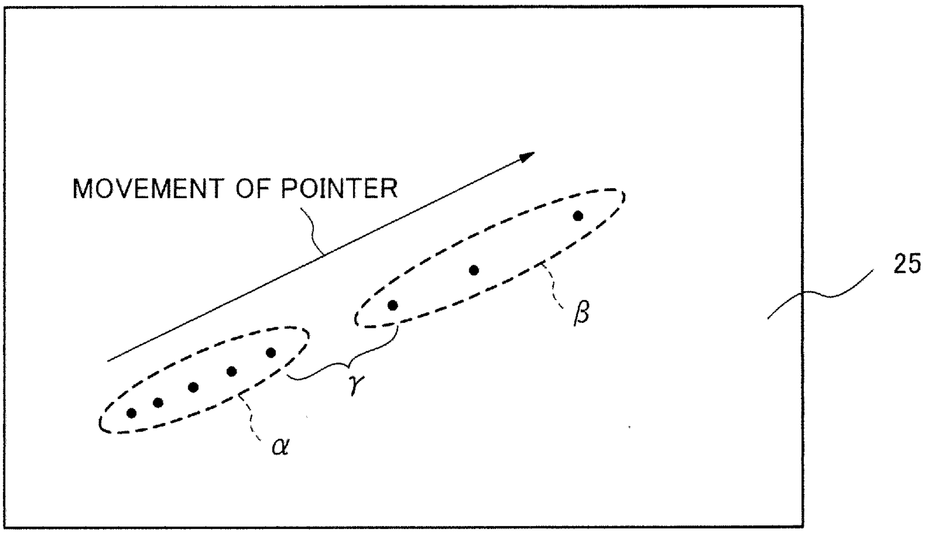

Fig. 12

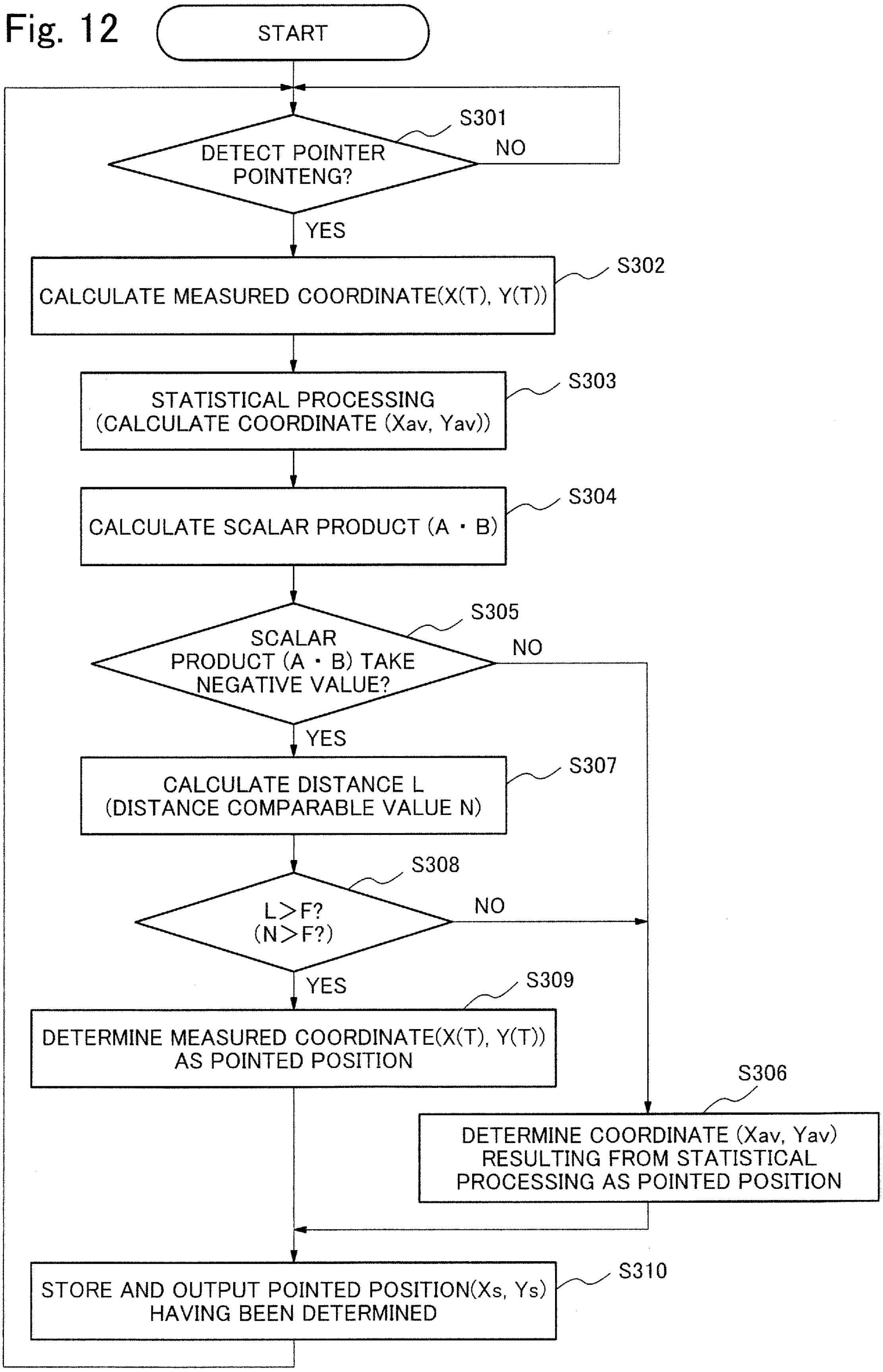
START
S301
DETECT POINTER POINTENG?
NO
YES
S302
CALCULATE MEASURED COORDINATE(X(T), Y(T))
S303
STATISTICAL PROCESSING (CALCULATE COORDINATE (Xav, Yav))
S304
CALCULATE SCALAR PRODUCT (A · B)
S305
SCALAR PRODUCT (A · B) TAKE NEGATIVE VALUE?
NO
YES
S307
CALCULATE DISTANCE L (DISTANCE COMPARABLE VALUE N)
S308
L>F? (N>F?)
NO
YES
S309
DETERMINE MEASURED COORDINATE(X(T), Y(T)) AS POINTED POSITION
S306
DETERMINE COORDINATE (Xav, Yav) RESULTING FROM STATISTICAL PROCESSING AS POINTED POSITION
S310
STORE AND OUTPUT POINTED POSITION(Xs, Ys) HAVING BEEN DETERMINED

Fig. 13

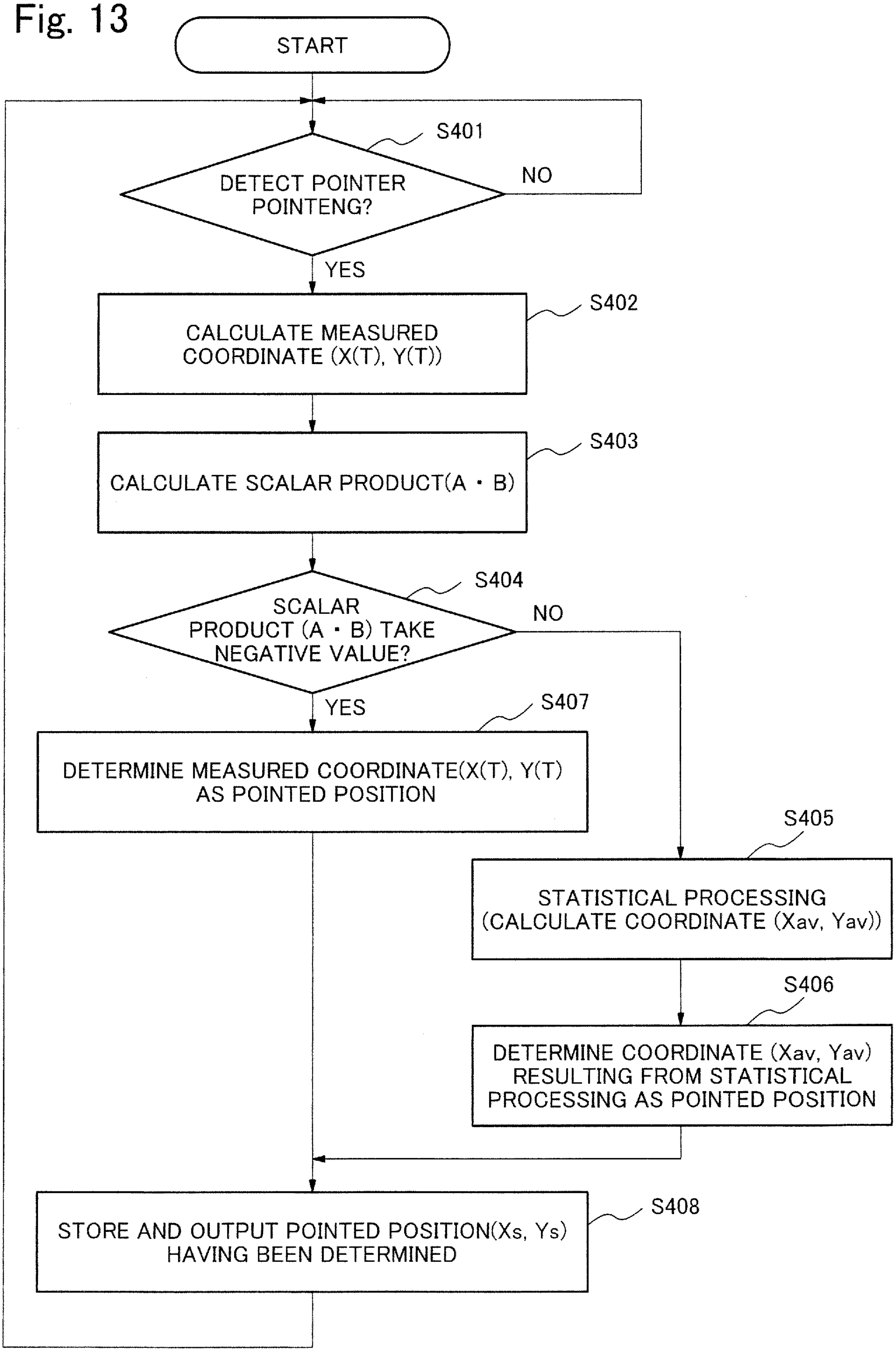
START
S401
DETECT POINTER POINTENG?
NO
YES
S402
CALCULATE MEASURED COORDINATE (X(T), Y(T))
S403
CALCULATE SCALAR PRODUCT(A・B)
S404
SCALAR PRODUCT (A・B) TAKE NEGATIVE VALUE?
NO
YES
S407
DETERMINE MEASURED COORDINATE(X(T), Y(T) AS POINTED POSITION
S405
STATISTICAL PROCESSING (CALCULATE COORDINATE (Xav, Yav))
S406
DETERMINE COORDINATE (Xav, Yav) RESULTING FROM STATISTICAL PROCESSING AS POINTED POSITION
S408
STORE AND OUTPUT POINTED POSITION(Xs, Ys) HAVING BEEN DETERMINED

Fig. 14

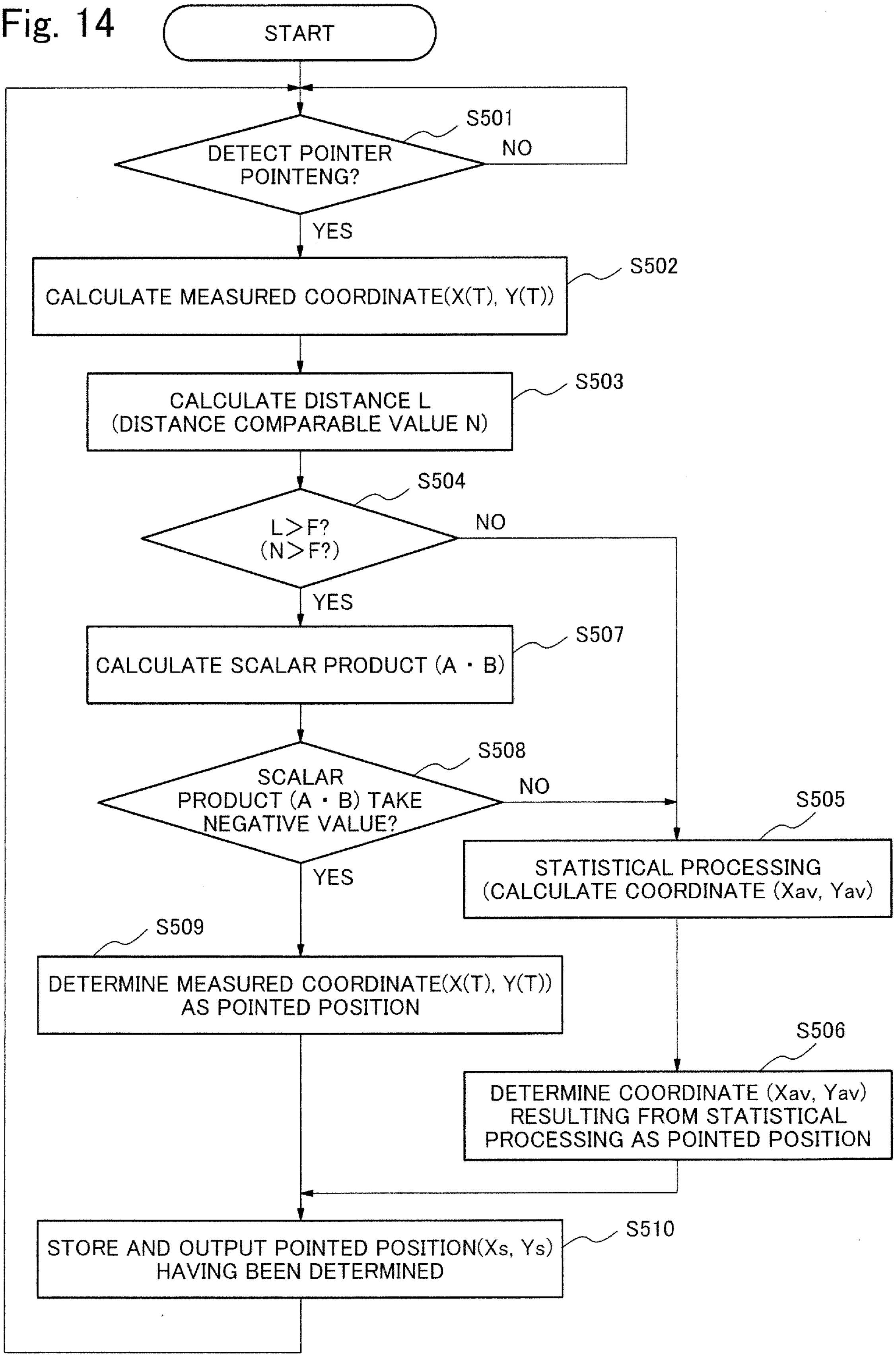
START
S501
DETECT POINTER POINTENG?
NO
YES
S502
CALCULATE MEASURED COORDINATE(X(T), Y(T))
S503
CALCULATE DISTANCE L (DISTANCE COMPARABLE VALUE N)
S504
L>F? (N>F?)
NO
YES
S507
CALCULATE SCALAR PRODUCT (A · B)
S508
SCALAR PRODUCT (A · B) TAKE NEGATIVE VALUE?
NO
YES
S505
STATISTICAL PROCESSING (CALCULATE COORDINATE (Xav, Yav)
S509
DETERMINE MEASURED COORDINATE(X(T), Y(T)) AS POINTED POSITION
S506
DETERMINE COORDINATE (Xav, Yav) RESULTING FROM STATISTICAL PROCESSING AS POINTED POSITION
S510
STORE AND OUTPUT POINTED POSITION(Xs, Ys) HAVING BEEN DETERMINED

Fig. 15

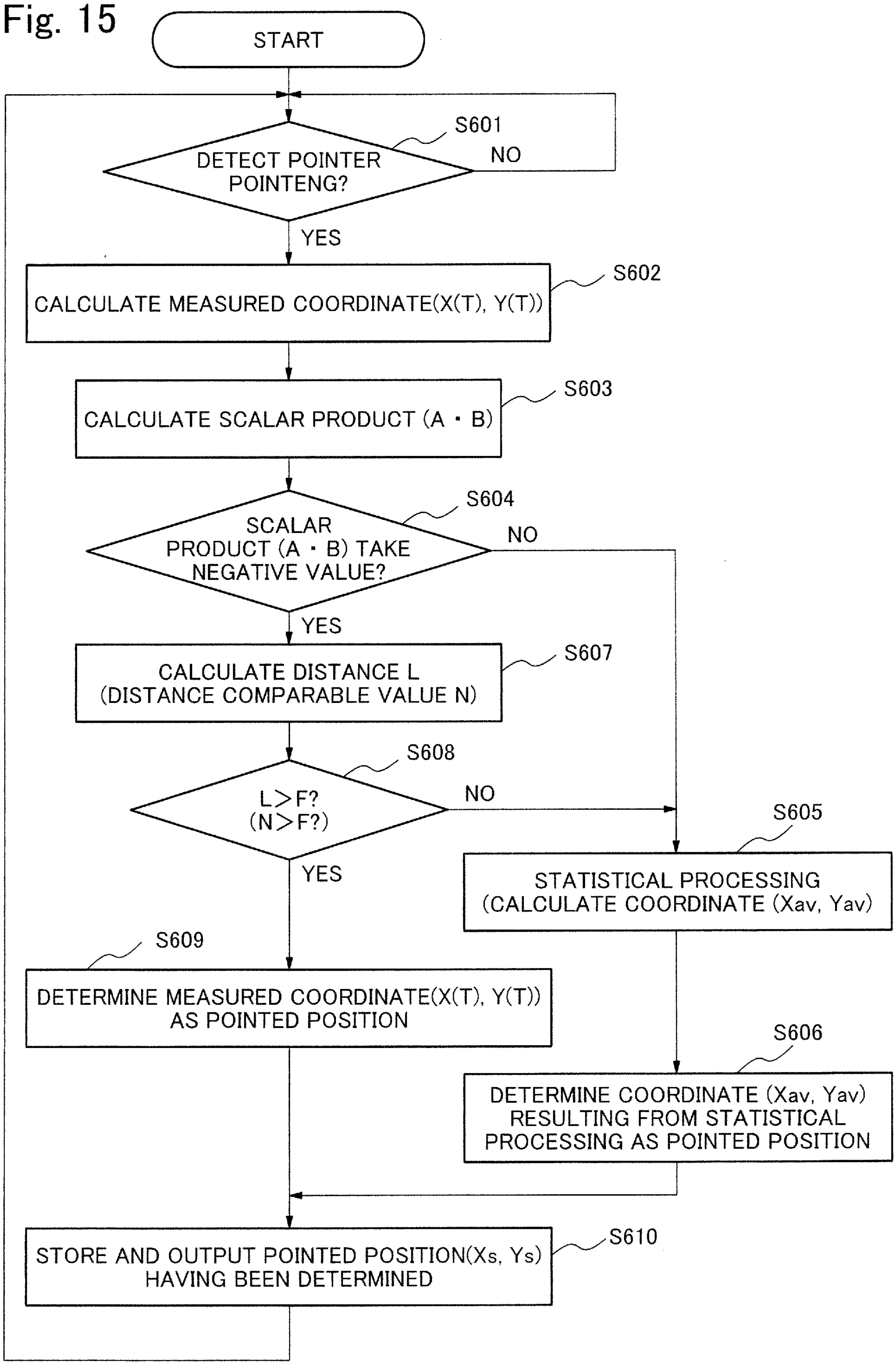
START
S601
DETECT POINTER POINTENG?
NO
YES
S602
CALCULATE MEASURED COORDINATE(X(T), Y(T))
S603
CALCULATE SCALAR PRODUCT (A · B)
S604
SCALAR PRODUCT (A · B) TAKE NEGATIVE VALUE?
NO
YES
S607
CALCULATE DISTANCE L (DISTANCE COMPARABLE VALUE N)
S608
L>F? (N>F?)
NO
YES
S605
STATISTICAL PROCESSING (CALCULATE COORDINATE (Xav, Yav)
S609
DETERMINE MEASURED COORDINATE(X(T), Y(T)) AS POINTED POSITION
S606
DETERMINE COORDINATE (Xav, Yav) RESULTING FROM STATISTICAL PROCESSING AS POINTED POSITION
S610
STORE AND OUTPUT POINTED POSITION(Xs, Ys) HAVING BEEN DETERMINED

Fig. 16

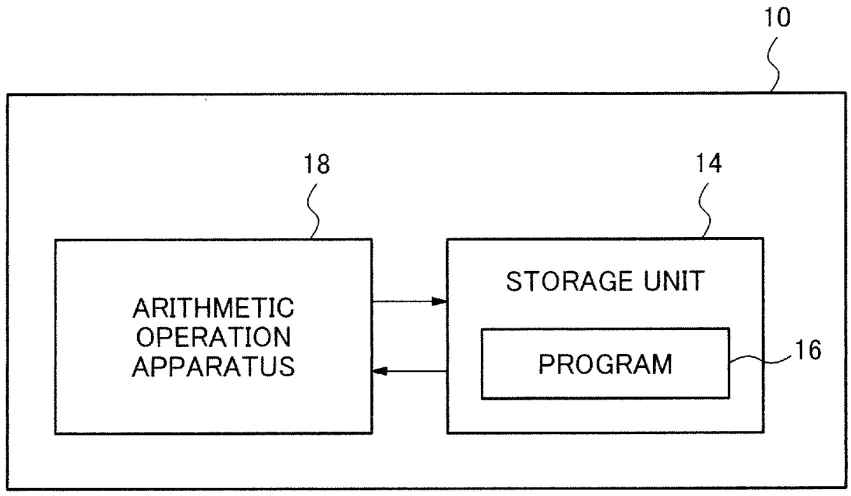
10
18
14
ARITHMETIC
OPERATION
APPARATUS
STORAGE UNIT
PROGRAM
16

Fig. 17

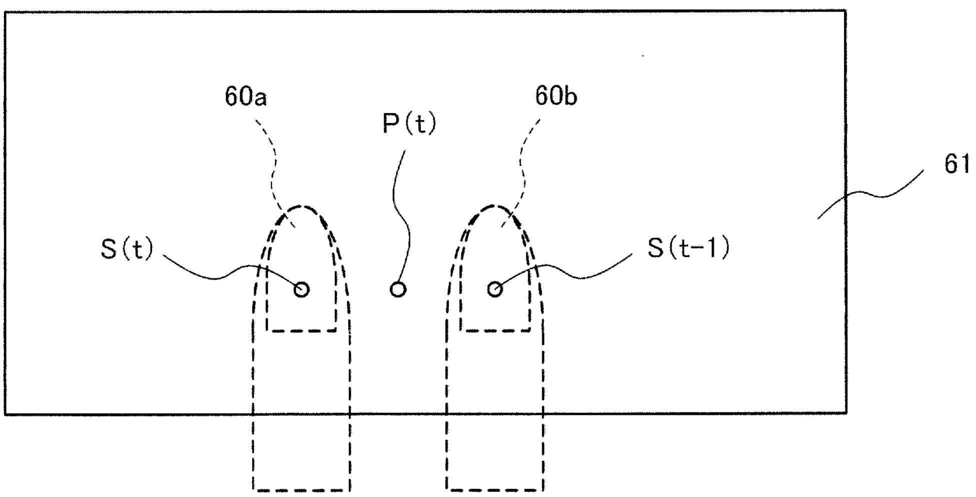
60a
P(t)
60b
61
S(t)
S(t-1)

## INTERNATIONAL SEARCH REPORT

International application No.
PCT/JP2011/060688

A. CLASSIFICATION OF SUBJECT MATTER
*G06F3/041*(2006.01)i

According to International Patent Classification (IPC) or to both national classification and IPC

B. FIELDS SEARCHED

Minimum documentation searched (classification system followed by classification symbols)
G06F3/041

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-296030 A (Sanyo Electric Co., Ltd.), 17 October 2003 (17.10.2003), abstract; all drawings (Family: none) | 1-16 |
| A | JP 9-319521 A (Oki Electric Industry Co., Ltd.), 12 December 1997 (12.12.1997), abstract; all drawings (Family: none) | 1-16 |
| A | JP 3-245218 A (Ricoh Co., Ltd.), 31 October 1991 (31.10.1991), claims; all drawings (Family: none) | 1-16 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 August, 2011 (01.08.11) | 09 August, 2011 (09.08.11) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11272413 A
- JP 2010116879 A